(19) **Europäisches Patentamt**

**European Patent Office**

**Office européen des brevets**

(11) **EP 0 668 711 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(51) Int Cl.[7]: **H05B 7/148**, B23K 9/073

(21) Anmeldenummer: **94102656.9**

(22) Anmeldetag: **22.02.1994**

(54) **Verfahren und Vorrichtungen zur Erfassung und Regelung von Massenströmen und damit korrelierten Grössen**

Methods and devices for measuring and controlling mass flows and correlated variables

Méthodes et dispositifs pour la mesure et le contrôle des débits massiques et des grandeurs correlées

(84) Benannte Vertragsstaaten:
**AT BE CH DE DK ES FR GB IT LI NL PT SE**

(43) Veröffentlichungstag der Anmeldung:
**23.08.1995 Patentblatt 1995/34**

(73) Patentinhaber: **Danilov, Wladimir**
**D-77694 Kehl (DE)**

(72) Erfinder: **Danilov, Wladimir**
**D-77694 Kehl (DE)**

(74) Vertreter: **Beetz & Partner Patentanwälte**
**Steinsdorfstrasse 10**
**80538 München (DE)**

(56) Entgegenhaltungen:
**EP-A- 0 403 413          WO-A-93/17533**
**DE-A- 3 149 175          US-A- 4 694 135**

- **SOVIET PATENTS ABSTRACTS Section EI, Week 8950, 31. Januar 1990 Derwent Publications Ltd., London, GB; Class S02, AN 89-369229 & SU-A-1 485 024 (AGRIC ELECTR RES IN) 7. Juni 1989**

**Beschreibung**

Die Erfindung betrifft Verfahren und Vorrichtungen zur quantitativen Erfassung von Massenströmen und von damit korrelierten Größen sowie Verfahren und Vorrichtungen zur Steuerung, Regelung und Optimierung von Prozessen, bei denen ein Massenstrom bzw. Massentransport in einem dynamischen System stattfindet.

Die Erfindung bezieht sich dabei insbesondere auch auf Verfahren und Vorrichtungen zur Regelung des Vorschubs oder der Nachführung von Elektroden bei Lichtbogenöfen, Lichtbogenschweißanlagen, Lichtbogen-Trennschweißanlagen und Lichtbogenlampen.

Unter einem Massenstrom werden im Rahmen der vorliegenden Erfindung allgemein ein Massenfluß eines Mediums, insbesondere eines Fluids, durch einen vorgegebenen Raum oder ein vorgegebenes Volumenelement oder eine Grenzfläche hindurch im Sinne eines rein physikalischen Transports einschließlich Viskositäts- und Dichteänderungen, ein Massenfluß aufgrund einer physikalischen und/oder chemischen Phasenumwandlung oder Phasenneubildung, wie zum Beispiel insbesondere Schmelzen, besonders Zonenschmelzen, Erstarren, Kristallisieren, Fest-Fest-Phasenumwandlungen, insbesondere Rekristallisation, und/oder Flüssig-Flüssig-Phasenumwandlungen, besonders bei Flüssigkristallen, Verdampfen, Kondensieren oder Sublimieren, sowie ein Massenfluß aufgrund chemischer Vorgänge verstanden, zum Beispiel insbesondere aufgrund chemischer Reaktionen, wie Polyreaktionen, die unter Veränderung der Dichte (Dilatometrie) oder der Viskosität (Viskosimetrie) ablaufen können, elektrochemische und galvanische Abscheidungen, Plasmareaktionen etc..

Die Massenströme können dabei auch großräumigen Systemen zugeordnet sein und etwa tektonische Verschiebungen oder Verwerfungen innerhalb der Erdkruste betreffen.

Die Erfindung bezieht sich ferner auch auf die Erfassung virtueller Massenströme. Darunter werden sehr generell solche Phänomene oder Effekte verstanden, bei denen Massen, wie Atome oder Moleküle in einem Kristallgitter, besonders in Feststoffen oder Festkörpern, thermisch und/oder mechanisch aufgrund einer physikalischen elastischen oder nichtelastischen Deformation beanspruchungsbedingt bleibend oder reversibel örtlich verschoben werden, zum Beispiel bei Torsion. Der Begriff des virtuellen Massenstroms soll ferner auch den Grenzfall eines in einem Medium fließenden elektrischen Stroms sowie Phänomene wie Kristallisation, Schmelzen und Hydratation, z.B. beim Abbinden hydraulischer Materialen, einschließen.

Im Rahmen der Erfindung kann es sich dabei um beliebige Medien handeln, in denen oder mit denen Massenströme stattfinden, besonders um Fluids, und insbesondere um Flüssigkeiten, Lösungen, Flüsssigkristallmaterialien, Pasten, Emulsionen, Suspensionen, Mikroemulsionen, inverse Emulsionen, Liposomen, Gase, Dämpfe, Aerosole, hydraulische Materialien, Zellsuspensionen und dergleichen.

Hinsichtlich der Dimension sind Massenströme im Sinne der Erfindung normierte oder bezogene Massen, die besonders in den Dimensionen Masse/Länge, Masse/Fläche und insbesondere Masse/Zeit ausgedrückt werden.

An den Massenströmen werden beliebige Größen gemessen, die eine strömungsabhängige Eigenschaft des Massenstroms oder der entsprechenden Masse kennzeichnen, insbesondere beispielsweise ein im dynamischen Zustand des Systems durch das Medium fließender elektrischer Strom, eine sich daran oder darin ausbildende elektrische Spannung, entsprechende akustische, optische oder elektrooptische Signale und dergleichen.

Unter mit Massenströmen korrelierten Größen werden beliebige Größen verstanden, die einer Eigenschaft des Massenstroms oder der entsprechenden strömenden Masse zugeordnet sind, insbesondere zum Beispiel die Absolutwerte der Masse selbst, die Temperatur, die Viskosität, die Dichte und ähnliche Eigenschaften der betreffenden Medien, sowie etwa charakteristische Zeitintervalle oder Zeitpunkte, insbesondere Anfangs- und vor allem Endpunkte von entsprechend erfaßten Prozessen, ganz besonders von Schmelzprozessen, wie sie in Lichtbogenöfen, beim Lichtbogenschweißen oder in Lichtbogenlampen auftreten.

Ein ganz besonders wichtiger erfindungsgemäßer Aspekt ist die Erfassung, Steuerung und Regelung und gegebenenfalls Optimierung der Erzeugung von Metallschmelzen in Lichtbogenöfen sowie der Erzeugung von Schweißnähten durch Lichtbogenschweißen oder der Trennung von Metallen durch Lichtbogen-Trennschweißen unter Kontrolle der Vorschubbewegung bzw. der Nachführung der Elektroden.

Die Regelung und Optimierung von Lichtbogen-Schweißeinrichtungen und Lichtbogenöfen stellt, obgleich im Stand der Technik bereits zahlreiche Lösungsvorschläge angegeben wurden, noch immer ein großes Problem dar, insbesondere in wirtschaftlicher Hinsicht wegen nicht optimaler Energieausnutzung und in ökologischer Hinsicht, da bei nicht optimaler Prozeßführung des Schmelzvorgangs bei lokaler Überhitzung fluorhaltige Dämpfe aus Flußmitteln in die Umwelt gelangen können.

Bei Lichtbogenöfen kommt es in erster Linie darauf an, das in den Ofenkessel eingefüllte Material in möglichst kurzer Zeit zu schmelzen, um so den Ofendurchsatz zu maximieren, wobei zugleich der hierfür erforderliche Energieaufwand minimiert werden soll. Aufgrund der erheblichen Abstrahlungsverluste wegen der herrschenden hohen Temperaturen kommt dabei der Verkürzung der Einschmelzdauer eine besondere Bedeutung zu. Der Betrieb von Lichtbogenöfen ist entsprechend stark abhängig von einer guten Regelung der Elektrodenvorschubbewegung, die dazu dient, beim Einschmelzen von stückigem Schrottmaterial, durch Aufkochen der Schmelze oder aus anderen Gründen entstandene Fluktuationen des durch die Elektrode fließenden Stroms und den Abbrand der Elektroden auszugleichen. Hierzu werden elektromechanische und elektrohydraulische Elektrodensteuerungen oder Regelungen herangezogen. Herkömmlicherweise dient als Regelgröße für solche Regelsysteme der Wechselstromwiderstand (Impedanz), der auf einen konstanten, einstellbaren Sollwert hin geregelt wird. Bei Auftreten einer Regelabweichung wird nach Maßgabe der entsprechenden Reglercharakteristik ein entsprechendes Stellglied verstellt, das die Elektrode entsprechend zur Schmelze hin oder von der Schmelze weg bewegt.

Die Elektrodenvorschubregelung unter Konstanthaltung des Stroms und der Spannung ist jedoch ungenau, weil sie auf der Erfassung der Schmelzwirkleistung beruht, die eine Summe aus Nutz- und Verlustleistung darstellt. Dies hat zur Folge, daß auch bei ausreichend genauer Regelung und hoher Regelgeschwindigkeit der Lichtbogenleistung keine direkte Beziehung zwischen der elektrischen Leistung und dem dadurch hervorgerufenen Massenstrom (geschmolzene Masse pro Zeiteinheit) gewährleistet ist. Beim Lichtbogenschweißen und Lichtbogen-Trennschweißen liegen die Probleme ähnlich, da bei allen diesen Vorgängen der Energieeintrag wie auch der Massentransfer über ein Plasma erfolgen.

Aus DE 31 49 175 ist ein Verfahren zur Überwachung des Schmelzvorgangs in einem Lichtbogenofen bekannt, bei dem von der Nichtlinearität des Lichtbogens abhängige und für verschiedenartige Zustände der Schmelze unterschiedliche Kontrollparameter bestimmt werden, die mit vorher bestimmten Basiswerten verglichen werden. Zur Bildung dieser Kontrollparameter werden Momentanwerte des Wirkwiderstands des Lichtbogens für mindestens zwei Zeitpunkte einer Periode des Wechselstroms herangezogen und miteinander zu einem Kontrollparameter verknüpft, wobei der erste Zeitpunkt im Zeitabschnitt der Lichtbogenzündung liegt und der zweite Zeitpunkt dem maximalen Momentanwert des Stroms entspricht. Zusätzlich wird eine Messung der Induktivität des Lichtbogenkreises am Anfang jeder Stromperiode vorgenommen. Eine weitergehende Verarbeitung der erhaltenen Meßwerte zur Direktbestimmung der Schmelzwirkleistung des Lichtbogens wird nicht vorgenommen.

Aus DD 29 52 48 ist ein Verfahren zur Messung der Instabilität eines Lichtbogens in einem Elektroofen bekannt, bei dem eine Wechselbeziehung zwischen der Änderung der Stromstärke im Lichtbogen und der Schlackenaufblähung ausgenützt wird. Bei dieser herkömmlichen Verfahrensweise wird die Stromstärke des durch den Lichtbogen fließenden Stroms über ein Signal ermittelt, das dem Differentialquotienten (dI/dt) der Stromstärke entspricht, insbesondere durch eine Rogowski-Spule. Dieses Signal wird einer Filterung durch ein Hochfrequenz-Breitbandfilter und schmalbandiges Tiefpaßfilter unterzogen, worauf ein Teilermodul das Verhältnis der von den Filtern stammenden Signal-Effektivwerte erzeugt, das als Indikator für die Schlackenaufblähung dient und bei maximaler Schlackenaufblähung einen Minimalwert annimmt. Das dieses Verhältnis kennzeichnende Signal wird entweder einer Anzeige zugeführt oder kann zur Regelung bestimmter Betriebsparameter des Lichtbogenofens herangezogen werden, beispielsweise zur Bestimmung der Beendigung des Schmelzprozesses. Eine Verwendung des Differentialquotienten der Stromstärke, der durch die Rogowski-Spule ermittelt wird, zur Vorschubregelung der Elektroden ist in dieser Druckschrift nicht angegeben.

Aus SU 35 87 96 ist ferner bekannt, zur Bestimmung des Anfangs und des Endes des Schmelzvorgangs den Lichtbogenstrom oder den Spannungsabfall im Lichtbogenraum zu erfassen und entsprechende Werte nach Mittelung mit Sollwerten zu vergleichen. Der Vergleich erfolgt nach Fourier-Zerlegung der elektrischen Signale des Stroms oder der Spannung, wobei auch in Abhängigkeit vom Verhältnis bestimmter harmonischer Komponenten des Stroms oder der Spannung geregelt werden kann.

Aus WO 93/17533 war ein Verfahren zur Messung von elektrodenbezogenen elektrischen Größen bei Lichtbogenöfen bekannt, das darauf beruht, die wechselseitige Korrelation zwischen den durch die Elektroden fließenden Strömen und der in den Lichtbogenofen eingeführten Gesamtleistung zu ermitteln. Hierbei werden die schnellen, natürlichen Fluktuationen der Elektrodenströme und die in den Lichtbogenofen eingeführte Leistung sowie Schätzwerte herangezogen. Nach dieser vorbekannten Verfahrensweise werden zu aufeinanderfolgenden Zeitpunkten viele aufeinanderfolgende Strom- und Spannungsmessungen bei verschiedenen Energieverteilungen im Lichtbogenofen vorgenommen, deren Ergebnisse bei den gewünschten Frequenzen zur Ermittlung von Schätzwerten für elektrodenbezogene Größen, wie etwa von Impedanzen, Spannungen oder Leistungen, dienen, mit denen eine konsistente Relation zwischen den Elektrodenströmen und der Gesamtleistung oder von Komponenten davon ermittelt wird.

Die Ermittlung der apparenten Gesamtleistung $S_T$ erfolgt nach der Gleichung

$$S_T = I_1^2 Z_{E1} + I_2^2 Z_{E2} + I_3^2 Z_{E3},$$

in der $I_1$ bis $I_3$ die Ströme und $Z_{E1}$ bis $Z_{E3}$ die äquivalenten Impedanzen der drei Elektroden bedeuten. Alternativ können auch die Realkomponenten und die Imaginärkomponenten dieser Impedanzen unter analoger Aufsummierung herangezogen werden.

Das vorbekannte Verfahren beruht folglich auf der Aufstellung eines linearen Modells für die elektrodenbezogenen Impedanzen, die dann zur Berechnung der elektrodenbezogenen Leistung und der elektrodenbezogenen Spannung verwendet werden können.

Der Erfindung liegt die Aufgabe zugrunde, Verfahren und Vorrichtungen zur quantitativen Erfassung, Regelung und Optimierung von Massenströmen und damit korrelierten Größen anzugeben, insbesondere Verfahren und Vorrichtungen zur Regelung von elektrischen Lichtbogenöfen, elektrischen Schweißeinrichtungen und Lichtbogenlampen.

Die Aufgabe wird gemäß den unabhängigen Ansprüchen gelöst.
Die abhängigen Ansprüche betreffen vorteilhafte Ausführungsformen der Erfindungskonzeption.

Die Erfindung beruht auf der überraschenden Feststellung, daß die 2. Ableitung eines einem Massenstrom in einem dynamischen System zugeordneten Signals nach der Zeit in enger Korrelation mit dem Massenstrom oder etwa dem Anteil einer bestimmten Phase der betreffenden Masse in einem Lichtbogenplasma steht.

Bei den meisten erfindungsgemäß zugrundeliegenden dynamischen Systemen, in denen Massenströme erfaßt bzw. geregelt werden sollen, sind die entsprechenden elektrischen Signale, die aus dem System abgeleitet werden, in mehr oder weniger starkem Maße mit Fluktuationen behaftet, weisen also beispielsweise über der betreffenden Netzfrequenz Überlagerungen innerhalb eines weiten Frequenzbereichs auf, der von sehr niedrigen Frequenzen von etwa 0,1 Hz bis etwa 100 kHz reicht. Das Problem liegt in solchen Fällen insbesondere darin, daß die Fluktuationen, die beispielsweise durch ein Lichtbogenplasma in Wechselwirkung mit einer Metallschmelze hervorgerufen werden, keine Regelmäßigkeit aufweisen, sondern stochastische bzw. chaotische Fluktuationen darstellen. Dementsprechend lassen sich durch harmonische Analyse, etwa durch Fourier-Zerlegung entsprechender Signale in harmonische Komponenten, die komplexen Signalverhältnisse effektiv nicht so vereinfachen, daß hierdurch eine bessere meßtechnische Erfassung oder eine bessere Regelung, etwa unter Energieoptimierung, möglich wäre.

Ausgehend von der Feststellung, daß die 2. Ableitung eines beispielsweise einem Lichtbogenplasma zugeordneten Stromsignals mit der Massenschmelzgeschwindigkeit korreliert werden kann, wurden im Rahmen der vorliegenden Erfindung in zahlreichen Bereichen der Technik analoge Versuche durchgeführt, in denen ein aus einem dynamischen Ensemble gewonnenes elektrisches Signal erzeugt und die Korrelation seiner 2. Ableitung nach der Zeit mit dem entsprechenden Massenstrom oder einer damit korrelierten Größe geprüft wurde. Dabei ergab sich, daß auch auf zahlreichen anderen Gebieten, in denen strömende Ensembles einen Massenstrom bilden, einschließlich der oben erläuterten virtuellen Massenströme, eine klare Korrelation zwischen der 2. Ableitung des entsprechenden Signals und dem Massenstrom möglich ist.

Damit wird zum ersten Mal eine Möglichkeit eröffnet, einen Massenstrom direkt quantitativ zu erfassen und auch direkt zu regeln, indem, zum Beispiel bei einem Lichtbogenofen, durch entsprechende Stellbewegung der Elektrode anstelle einer Konstanthaltung des Stroms eine konstante Massenschmelzgeschwindigkeit erzielt werden kann. Da die Massenschmelzgeschwindigkeit (Massenstrom) den Prozeßparameter darstellt, der im Hinblick auf optimale Energieausnutzung und optimale Temperaturführung am wichtigsten ist, eröffnet die vorliegende Erfindung insbesondere auch auf diesem Gebiet der Lichtbogenöfen und der Lichtbogenschweißtechnik die Möglichkeit der Direktregelung der pro Zeiteinheit erzeugten Metallmasse über die Elektrodennachführung. Gleiches gilt analog auch für die anderen erläuterten Anwendungsbereiche.

Die 2. Ableitung des entsprechenden herangezogenen Signals stellt gewissermaßen einen sensiblen Indikator für die Tendenz zur Änderung des Signals dar und erlaubt so eine Regelung mit außerordentlich hoher Zugriffsgeschwindigkeit und entsprechend hoher, bisher nicht erreichter Genauigkeit.

Das erfindungsgemäße Verfahren zur quantitativen Erfassung von Massenströmen und/oder damit korrelierten Größen umfaßt folgende Maßnahmen:

(A) Erfassung eines einer Eigenschaft oder Eigenschaften des zu erfassenden Massenstroms (dM/dt) einer Masse M oder einer damit korrelierten Größe zugeordneten elektrischen Signals (I(t)) oder eines nichtelektrischen Signals, das in ein elektrisches Signal (I(t)) umgewandelt wird, zu einem oder mehreren vorgegebenen Zeitpunkten oder während der gesamten Dauer des Massenströmungsvorgangs, gegebenenfalls unter Beachtung des Shannon-Theorems bei der Wahl der Erfassungszeitpunkte,

(B) Erzeugung der 2. Ableitung $d^2I/dt^2$ des Signals I (t) und

(C) Bestimmung des Massenstroms (dM/dt) der Masse M bzw. einer damit korrelierten Größe nach der Beziehung (i):

$$dM/dt = k_0 + k_1 \cdot d^2I/dt^2 + k_2 \cdot (d^2I/dt^2)^2 + k_3 \cdot (d^2I/dt^2)^3 \qquad (i),$$

worin $k_0$, $k_1$, $k_2$ und $k_3$ vorgegebene und insbesondere durch vorherige Eichung bestimmte Konstante darstellen und die Bedingungen

$$k_0, k_2, k_3 \geq 0 \text{ und } k_1 > 0$$

gelten.

Die Bestimmung des Massenstroms dM/dt in Schritt C wird nach der Beziehung (i) vorgenommen, wobei der Koeffizient $k_1$ des linearen Terms nicht gleich Null sein kann. Die Polynomentwicklung, die der Beziehung zugrundeliegt, ist, falls auch der kubische Term berücksichtigt wird ($k_3 > 0$), außerordentlich genau an die jeweils herrschenden Verhältnisse anpaßbar und erlaubt so, besonders nach einer vorherigen Eichung nach einem unabhängigen Verfahren, eine quantitative Bestimmung differentieller und integraler Massenströme.

Der in Schritt C erhaltene Massenstrom dM/dt kann zur Ermittlung der entsprechenden Masse integriert werden, wobei eine einfache Integration ohne Kenntnis der Integrationskonstante bereits in vielen Fällen ausreichend ist, wenn es beispielsweise um die relative Zunahme oder Abnahme von Massen innerhalb bestimmter Zeitintervalle geht. Zu einer Absolutbestimmung kann eine durch eine unabhängige Eichung ermittelte Integrationskonstante herangezogen werden.

Auf diese Weise lassen sich auch die Endpunkte entsprechender Massenströmungsprozesse leicht ermitteln, da z. B. bei Lichtbogenöfen am Endpunkt des Schmelzvorgangs der Massenstrom auf niedrige Werte und im Grenzfall auf Null absinkt.

Wenn es sich, was in den meisten Fällen gegeben ist, bei den Eingangssignalen I(t) um Wechselstromsignale handelt, ist es günstig, das Signal vor der Erzeugung der zweiten Ableitung gleichzurichten und/oder zur Abtrennung unerwünschter Frequenzen, insbesondere der Netzfrequenz von beispielsweise 50 oder 60 Hz oder unerwünschter Hochfrequenzen, zu filtern. Entsprechende analoge und digitale Filter sind dem Fachmann geläufig, ebenso die Erzielung bestimmter erwünschter Durchlaßkennlinien der Filter. Im Hinblick auf die erfindungsgemäß bevorzugte digitale Signalverarbeitung sind entsprechend digitale Filter bevorzugt.

Wenn die Sensoreinrichtung, von der das Eingangssignal I(t) stammt, ein analoger Sensor ist, wird bei digitaler Signalverarbeitung eine A/D-Wandlung vorgenommen, wobei sich in diesen Fällen eine Gleichrichtung des Signals erübrigt.

Die Erzeugung der 2. Ableitung $d^2I/dt^2$ in Schritt B erfolgt unter Verwendung von dem Fachmann an sich geläufigen Differenziereinrichtungen, die auch mit entsprechenden Filtern kombiniert sein können.

Es ist ferner vorteilhaft, stark fluktuationsbehaftete Signale nach Bildung der 2. Ableitung einer Mittelung zu unterziehen, wobei dem Fachmann zahlreiche mathematische Mittelungsverfahren zur Verfügung stehen.
Für die anmeldungsgemäß zugrundeliegenden dynamischen Massenströmungssysteme hat sich eine quadratische Mittelung des Signals der 2. Ableitung nach der Beziehung (ii)

$$V = \sqrt{\frac{1}{T} \int_0^T (d^2 I/dt^2)^2 \, dt} \qquad (ii),$$

worin

V    den gemittelten Signalwert und
T    die Integrationsdauer bedeuten,

als besonders günstig erwiesen. Die Mittelung erfolgt vorteilhaft vor der Durchführung des Schrittes C.

Die Ermittlung einer geeigneten Integrationsdauer ist dem Fachmann ebenfalls geläufig und kann aufgrund einfacher Versuche erfolgen.

Ein typisches Beispiel für die erfindungsgemäße Erfassung eines virtuellen Massenstroms ist die Erfassung einer Deformation oder Torsion mit dem Ziel der Ermittlung von Drehmomenten, wie sie herkömmlicherweise etwa mit Dehnungsmeßstreifenanordnungen oder Halbleiterfühlern gemessen werden. Die Deformation beispielsweise eines metallischen Festkörpers führt zu einer damit korrelierten Änderung des Widerstands, so daß ein entsprechendes elektrisches Signal, etwa unter Konstanthaltung der anliegenden Spannung, unmittelbar aus dem Festkörper selbst, das heißt, ohne Verwendung einer Dehnungsmeßanordnung, abgeleitet und erfindungsgemäß weiterverarbeitet werden kann. Das nach der Erzeugung der 2. Ableitung vorliegende Signal bzw. das nach Gleichung (i) normierte Signal kann direkt der Torsion, der Deformation bzw. einem entsprechenden Drehmoment zugeordnet werden. Damit liegt auf einem wichtigen technischen Gebiet durch die Erfindung ein völlig neuartiges Meßverfahren vor, das sich durch große Einfachheit auszeichnet.

Im Rahmen der Erfindung können auch mit Massenströmen korrelierte Größen quantitativ erfaßt und auch geregelt werden, beispielsweise rheologische Eigenschaften eines Fluids und insbesondere die kinematische Viskosität. In Schritt A wird dabei zum Beispiel der elektrische Widerstand oder die elektrische Leitfähigkeit des Fluids oder ein durch das Fluid fließender Strom als der Masse zugeordnetes Signal I(t) verwendet und in Schritt C der Massenstrom als entsprechende rheologische Eigenschaft bestimmt.

Ein besonders wichtiges Anwendungsgebiet der Erfindung liegt in der Messung und Regelung von Massenströmen, die durch Behälter oder Leitungen fließen. Derartige Fluids können sowohl beliebige homogene Flüssigkeiten und Fluids als auch heterogene Flüssigkeiten bzw. Fluids sein, wobei Emulsionen und Suspensionen, beispielsweise auch Zellsuspensionen, besonderes Interesse genießen. Auch in diesen Fällen wird aus der strömenden Masse ein entsprechendes elektrisches Signal abgeleitet, das etwa der Leitfähigkeit des strömenden Mediums entspricht, und als der Masse zugeordnetes Signal I(t) verwendet, woraus über die 2. Ableitung dieses Signals dann der entsprechende Massenstrom bzw. Durchsatz oder eine ihm proportionale oder damit korrelierte Größe bestimmt wird.

Wie später erläutert wird, läßt sich dieser Durchsatz, der einem Momentanwert eines strömenden dynamischen Systems entsprechen kann, auch als Istwert für die Regelung entsprechender Durchsätze heranziehen. Auch Ausgangssignale von Laser-Doppler-Meßeinrichtungen, wie sie üblicherweise zur Ermittlung der Strömungsgeschwindigkeit herangezogen werden, lassen sich erfindungsgemäß als Eingangssignale verwenden. Die Abhängigkeit der Dopplerverschiebung von der Intensität der Meßsignale erlaubt ferner eine unabhängige Bestimmung von Teilchengrößen in strömenden heterogenen Systemen.

Entsprechende Fluids können auch beliebige homogene Lösungen niedermolekularer oder hochmolekularer Stoffe sein, beispielsweise Polymerlösungen, Polymerschmelzen oder Metallschmelzen, sowie etwa Plasmen. Polymerschmelzen genießen dabei neben Metallschmelzen und Plasmen besonderes Interesse, da die Polymerextrusion nach dem vorliegenden Stand der Technik nicht über den angestrebten Massenstrom, sondern über die physikalischen Eigenschaften des Extrudats (Strangaufweitung, Resonanzstrukturierung, etc.) vorgenommen wird.

Virtuelle Massenströme liegen auch beispielsweise bei abbindenden hydraulischen Materialien, wie Kalk, Gips und Zement, oder etwa bei vernetzenden Polymeren vor. In diesen Fällen läßt sich aufgrund der Erfindungskonzeption aus einem aus dem System abgeleiteten Meßsignal unter Zuordnung zu dessen 2. Ableitung auf die Geschwindigkeit des Abbindens der hydraulischen Materialien bzw. die chemische Reaktionsgeschwindigkeit und/oder die zeitliche Entwicklung von Eigenschaften wie der Festigkeit schließen, wobei charakteristische Zeitpunkte wie der Endpunkt des Abbindeprozesses oder die Erreichung einer vorgegebenen Festigkeit ermittelt und auch entsprechende Regelungen durchgeführt werden können. Gleiches gilt auch für den Grenzfall eines mit Fluktuationen bzw. Signalstörungen behafteten Stroms, der durch einen metallischen Leiter fließt, da sich erfindungsgemäß aufgrund der 2. Ableitung ein für zahlreiche Meß- und Regelfälle gut geeignetes Signal des entsprechenden "virtuellen Massenstroms" gewinnen läßt.

Die Erfindung erlaubt eine quantitative Messung und Regelung praktisch beliebiger strömender Medien, zu denen auch Aerosole gehören. Technisch wichtige Aerosole sind Kraftstoff-Luft-Gemische, die durch Kraftstoffeinspritzung in die Brennkammer von Brennkraftmaschinen entstehen.

Die Erfassung einer mit der Strömung des Aerosols korrelierten Meßgröße, etwa eines optischen Meßsignals, das der Streuung, Transmission oder Absorption entspricht oder aus einer Doppler-Meßeinrichtung stammt, erlaubt die Bestimmung des zugehörigen Massenstroms und auch die Absolutbestimmung entsprechender Massen. Die hierzu erforderliche Eichung läßt sich nach herkömmlichen Verfahren durchführen.

Das erfindungsgemäße Regelverfahren ist gekennzeichnet durch

- Verwendung des in (C) erhaltenen Massenstrom (dM/dt) der Masse M bzw. der damit korrelierten Größe als Istwert einer Regelgröße und

  (D) Regelung des Massenstroms der Masse M bzw. der damit korrelierten Größe durch Steuerung eines Stellgliedes über eine entsprechende Stellgröße in Abhängigkeit vom Istwert der Regelgröße oder von der Differenz zwischen dem Istwert der Regelgröße und einem vorgegebenen Sollwert oder von einem vorgegebenen Schwellenwert in einem geschlossenen Regelkreis.

Die erfindungssgemäßen Verfahrensweise zur Regelung von Massenströmen unterscheidet sich also im Prinzip von den oben erläuterten Verfahren zur Messung von Massenströmen dadurch, daß der erfaßte Wert des Massenstroms oder ein damit korrelierter Wert als Istwert verwendet wird, der in einer Steuer- bzw. Regeleinrichtung in an sich bekannter Weise mit einem Sollwert oder einem vorgegebenen Schwellenwert verglichen wird, wobei aus dem Vergleichsergebnis eine Stellgröße zur Ansteuerung eines Stellglieds abgeleitet wird. Diese Signalverarbeitung erfolgt vorzugsweise in einer an sich bekannten Logikschaltung. Es ist dabei nicht unbedingt erforderlich, die 2. Ableitung des Eingangssignals noch gemäß Gleichung (i) als Massenstrom zu eichen, da es für eine Regelung genügt, mit einem entsprechenden Relativwert zu arbeiten. Im Rahmen der Erfindung lassen sich sämtliche übliche Arten von Reglern realisieren, wobei zu berücksichtigen ist, daß die 2. Ableitung des Eingangssignals eine mit einer D-Charakteristik vergleichbare Regelcharakteristik ermöglicht. Damit lassen sich Regler mit kurzer Zugriffszeit und hoher Genauigkeit realisieren. Vorteilhaft werden solche Regelsysteme so konzipiert, daß der Logikeinheit, die die Stellgröße erzeugt, neben der 2. Ableitung des Eingangssignals oder einer ihr proportionalen Größe auch das Eingangssignal selbst oder eine diesem proportionale Größe zugeführt wird, um zusätzlich P- und/oder I-Charakteristiken zu erzeugen.

Das erfindungsgemäße Regelverfahren kann in vielen Fällen günstig so durchgeführt werden, daß nur dann eine Regelung des Massenstroms erfolgt, wenn der Istwert der Regelgröße oberhalb bzw. unterhalb eines vorgegebenen Schwellenwerts liegt. Hierdurch resultiert ein zweipunktartiges Regelverhalten, wobei nur in einem der beiden Zustände eine eigentliche Regelung unter raschem Zugriff auf der Basis der 2. Ableitung des Signals erfolgt.

Nach einer anderen vorteilhaften Ausführungsform des Regelverfahrens wird ein Schwellenwert vorgegeben und bei oberhalb des Schwellenwerts liegendem Istwert der Regelgröße nach einer ersten Charakteristik und bei unterhalb des vorgegebenen Schwellenwerts liegendem Istwert der Regelgröße nach einer zweiten, von der ersten verschiedenen Regelcharakteristik geregelt. Der Schwellenwert wird dabei günstigerweise vorteilhaft auf Werte festgelegt, bei denen ein Übergang von einem stabilen zu einem instabilen oder chaotischen Verhalten des Regelkreises vorliegt.

Besondere Anwendung findet das erfindungsgemäße Regelverfahren auf elektrische Lichtbogenöfen, bei denen mit Hilfe eines Lichtbogens zwischen dem Schmelzgut und einer Elektrode Metall geschmolzen wird, wobei der durch die Elektrode fließende Strom als I(t) gemessen und in zweifach nach der Zeit differenzierter Form ($d^2I/dt^2$) als Regelgröße verwendet wird, wobei ein Stellsignal zur Steuerung der Elektrodennachführung unter Verwendung der 2. Ableitung erzeugt wird. Dieses Verfahren ist durch folgende Schritte gekennzeichnet:

(1) Erfassung des durch die Elektrode fließenden Stroms I(t) bzw. eines ihm proportionalen Signals zu vorgegebenen Zeitpunkten oder kontinuierlich während der gesamten Dauer des Schmelzvorgangs in schritt A gegebenenfalls unter Beachtung des Shannon-Theorems bei der Wahl der Erfassungszeitpunkte,
(2) Erzeugung der 2. Ableitung

$$d^2I/dt^2 \text{ des Stroms I(t)}$$

und
(3) Steuerung des Elektrodenvorschubs über eine Stellgröße, die unter Verwendung des Wertes der zweiten Ableitung $d^2I/dt^2$ des Stroms oder eines daraus erhaltenen Signals sowie gegebenenfalls von anderen Meßsignalen erhalten ist, gemäß Schritt D.

Die gleiche Verfahrensweise eignet sich auch besonders vorteilhaft für die Regelung von elektrischen Schweißeinrichtungen und elektrischen Trennschweißeinrichtungen, bei denen mit Hilfe eines Lichtbogens zwischen dem Substrat und einer Elektrode Metall zur Erzeugung einer Schweißnaht geschmolzen bzw. zum Trennen oder Schneiden abgeschmolzen wird.

Dieses Verfahren erlaubt nicht nur eine völlig neuartige und hochgenaue Regelung entsprechender Schweißvorgänge, wodurch besonders hochwertige und genaue Schweißnähte automatisch hergestellt werden können, sondern ermöglicht auch die Protokollierung von Schweißvorgängen, da sich erfindungsgemäß sowohl die Absolutmasse als auch der Massenstrom zu beliebigen Zeitpunkten des Schweißvorgangs quantitativ ermitteln und etwa bestimmten Punkten längs einer Schweißraupe zuordnen lassen. Daher ist eine Korrelation zwischen dem Aussehen bzw. Zustand der Schweißnaht und einem entsprechenden Protokoll möglich. Damit kann das erfindungsgemäße Verfahren auch vorteilhaft zur Qualitätssicherung und Qualitätskontrolle bei Schweißungen eingesetzt werden.

Das Verfahren zur Regelung von Lichtbogenöfen und Schweißeinrichtungen, bei denen ein Plasma zwischen Substrat und Elektrode erzeugt und aufrechterhalten wird, läßt sich dadurch leicht optimieren, daß eine bestimmte vorgegebene Regelcharakteristik nur dann angewandt wird, wenn der Absolutwert der 2. Ableitung $d^2I/dt^2$ des Stromsignals I(t) über einem vorgegebenen Grenzwert liegt, da diese Situation bedeutet, daß das Risiko einer abrupten Erhöhung der Stromstärke und damit der Temperatur und der Schmelzgeschwindigkeit besteht. In diesem Fall kann nach Überschreiten des vorgegebenen Grenzwerts der 2. Ableitung des Stroms entweder, was besonders einfach ist, der Elektrodenvorschub so lange gestoppt werden, bis der Wert der 2. Ableitung wieder unterhalb des Schwellenwerts liegt, oder es kann bei Überschreitung des Schwellenwerts mit einer geeigneten zweiten Regelcharakteristik geregelt werden, vorteilhaft mit einer PID-Charakteristik, die sich von der Regelcharakteristik unterscheidet, die angewandt wird, wenn der Istwert der Regelgröße unterhalb des vorgegebenen Schwellenwerts liegt.

Ein solches erfindungsgemäßes Verfahren ist insbesondere dadurch gekennzeichnet, daß

(a) der Vorschub der Elektrode bei über dem Schwellenwert $((dM/dt)_{lim})$ liegendem Istwert und gegebenenfalls bei über einem Schwellenwert $I_{lim}$ liegendem Strom I(t) nach einer ersten Regelcharakteristik durchgeführt wird, die P-, PI-, PIDoder PDPI-Verhalten ergibt oder einer frei gewählten und vorzugsweise in Vorversuchen optimierten Kennlinie entspricht,

und/oder

(b) die Regelung nach der 2. Regelcharakteristik, insbesondere die Impedanz-Regelung, nach einer Regelcharakteristik durchgeführt wird, die P-, PI-, PIDoder PDPI-Verhalten ergibt oder einer frei gewählten und vorzugsweise in Vorversuchen optimierten Kennlinie entspricht.

Nachdem bei Lichtbogenöfen auch der Wert des Stroms I selbst eine entscheidende Prozeßvariable darstellt, ist es noch bevorzugter, neben der Schwellenwertüberwachung des Signals der 2. Ableitung auch eine entsprechende Überwachung des Stromsignals I(t) vorzunehmen und die Abschaltung des Elektrodenvorschubs oder die Regelung mit einer anderen Regelcharakteristik nur dann vorzunehmen, wenn sowohl der Wert der 2. Ableitung als auch der Wert des Stroms I(t) zugleich über den entsprechenden vorgegebenen Schwellenwerten liegen. Dies kann durch eine einfache logische UND-Verknüpfung in der Steuerlogik realisiert werden.

Es ist im Rahmen der Erfindung besonders vorteilhaft, die Lichtbogenregelung so durchzuführen, daß dann, wenn sich der Wert der 2. Ableitung unterhalb des vorgegebenen Schwellenwerts befindet, und gegebenenfalls auch der Wert des Stromsignals I(t) unter dem entsprechenden Schwellenwert liegt, die herkömmliche Impedanz-Regelung eingesetzt wird. Dies bedeutet, daß das erfindungsgemäße Verfahren ohne irgendeine Modifizierung einer vorhandenden herkömmlichen Impedanz-Regeleinrichtung dadurch implementiert werden kann, daß bei Überschreiten eines oder beider Schwellenwerte $((d^2I/dt^2)_{lim}$ bzw. $I_{lim})$ die herkömmliche Regeleinrichtung, etwa über einen stets vorhandenen Havarie-Eingang, kurzzeitig außer Betrieb gesetzt wird, bis, beispielsweise aufgrund der gestoppten Elektrodennachführung, der Lichtbogen wieder stabilisiert ist und die 2. Ableitung $d^2I/dt^2$ des Stromsignals wieder unterhalb des vorgegebenen Schwellenwerts liegt, worauf wieder die herkömmliche Impedanzregelung eingeschaltet bzw. zugeschaltet wird. Diese Konzeption ermöglicht es, herkömmliche Regeleinrichtungen in Stahlwerken mit minimalem Aufwand zu optimieren, ihnen also für bestimmte Betriebssituationen ein extern appliziertes, anderes Regelverhalten zu verleihen. Da die herkömmlichen Reglerinstallationen in Stahlwerken oder Lichtbogenschweißeinrichtungen teure Investitionen darstellen, liegt in dieser erfindungsgemäßen Kombination mit herkömmlichen Regeleinrichtungen ein besonders vorteilhafter und wirtschaftlich außerordentlich günstiger Anwendungsfall.

Der Zeitpunkt der Beendigung eines Schmelzvorgangs bei einem Lichtbogenofen bzw. einer Lichtbogen-Schweißeinrichtung kann aufgrund eines Glattheitskriteriums des zeitlichen Stromverlaufs oder des zeitlichen Verlaufs der 2. Ableitung ermittelt werden, indem die Amplitude der Fluktuationen während einer vorgegebenen Zeitdauer ermittelt und mit einem vorgegebenen Grenzwert verglichen und der Endpunkt festgestellt wird, wenn die Amplitude der Fluktuationen unterhalb des Grenzwerts bleibt. Alternativ dazu kann der Zeitpunkt der Beendigung des Schmelzvorgangs auch ermittelt werden, indem der Massenstrom dM/dt und/oder die sich daraus durch Integration ergebende relative oder absolute Masse des geschmolzenen Materials ermittelt wird.

Zur Glättung kann der Strom I(t), soweit das entsprechende Signal ebenfalls zur Regelung verwendet wird, einer Mittelung unterzogen werden, wobei das Signal vorteilhaft in Form zeitdiskreter Signale verwendet wird. Ebenso wie oben im Zusammenhang mit der Mittelung des Signals der 2. Ableitung erläutert, können auch hier bei der Mittelung des Stromsignals beliebige mathematische Mittelungsverfahren herangezogen werden, wobei die quadratische Mittelung nach der Beziehung (iii)

$$U = \sqrt{\frac{1}{T} \int_0^T I^2\,dt} \qquad\qquad (iii),$$

worin

U    den gemittelten Signalwert und

T    die Integrationsdauer

bedeuten,

besonders vorteilhaft ist. Der gemittelte Signalwert U wird dabei zur Stellgrößenerzeugung mit verwendet.

Die Festlegung der Grenzwerte $(d^2I/dt^2)_{lim}$ und $I_{lim}$ erfolgt günstigerweise so, daß diese Werte für ein gegebenes Lichtbogenofensystem und reproduzierbare Beschickung schrittweise maximiert werden. Damit ist es möglich, die Schmelzzeiten des Einsatzes gegenüber herkömmlichen Regelverfahren signifikant zu verringern, so daß sich eine entsprechende Verringerung des Energiebedarfs ergibt, da bei maximierter Schmelzgeschwindigkeit die kürzesten Schmelzzeiten und damit die geringsten Energieverluste vorliegen, wobei zugleich überhöhte Temperaturen und damit verbundene Abstrahlungsverluste vermieden werden.

Bei üblichen, mit Dreiphasen-Drehstrom arbeitenden Lichtbogenöfen werden vorteilhaft alle drei Elektroden erfindungsgemäß gesteuert bzw. geregelt.

Die praktische Anwendung des erfindungsgemäßen Lichtbogenofen-Regelungsverfahrens an einem 100-Tonnen-Lichtbogenofen mit drei Elektroden und einer Leistung von 600 MW in einer Versuchsreihe von 75 Chargen ergab eine Verringerung des Energieverbrauchs von 460 auf 386 kW/t und eine Verkürzung der Schmelzzeit von 80 auf 62 min.

Die Erfindung kann auch zur Regelung von Lichtbogenöfen nach dem Aufschmelzen der gesamten Charge vorteilhaft herangezogen werden. In dieser Betriebsphase dient der Lichtbogen zur Erhitzung der Schmelze vor dem Abstich. Dabei soll der Lichtbogen innerhalb der Schlackenschicht liegen, um Abstrahlungsverluste und dadurch bedingte Schäden an der Ofenausmauerung zu vermeiden.

Bei der herkömmlichen Impedanzregelung kann dieser Betriebszustand, bei dem der Lichtbogen ganz von der Schlacke eingeschlossen ist, und der akustisch erkennbar ist, nicht erfaßt werden.

Beim erfindungsgemäßen Verfahren kann andererseits der angestrebte Lichtbogenzustand über das Signal der 2. Ableitung des Stroms, $d^2I/dt^2$, feinfühlig erfaßt und durch entsprechende Regelung des Elektrodenabstands von der Schmelze aufrechterhalten werden. Zugleich ist damit auch eine Indizierung des Schlackenniveaus und eine Erfassung des Zeitpunkts, wann Schlackenbildner wie z.B. Kalk nachgeblasen werden müssen, möglich.

Die erfindungsgemäße Vorrichtung zur Durchführung des erfindungsgemäßen Verfahrens zur quantitativen Erfassung von Massenströmen und/oder damit korrelierten Größen weist auf:

- eine Sensoreinrichtung zur Erzeugung eines einer Eigenschaft oder Eigenschaften eines Massenstroms (dM/dt) einer Masse M oder einer damit korrelierten Größe zugeordneten elektrischen Signals (I(t)), die gegebenenfalls eine Einrichtung aufweist, mit der ein nichtelektrisches Signal in ein entsprechendes elektrisches Signal I(t) umgewandelt werden kann,
- eine Differenziereinrichtung, in der die 2. Ableitung $d^2I/dt^2$ des Signals I(t) gebildet wird,
- eine Einrichtung zur Bestimmung des Massenstroms (dM/dt) aus dem Signal der 2. Ableitung nach der Beziehung (i)

$$dM/dt = k_0 + k_1 \cdot d^2I/dt^2 + k_2 \cdot (d^2I/dt^2)^2 + k_3 \cdot (d^2I/dt^2)^3 \qquad (i),$$

worin $k_0$, $k_1$, $k_2$ und $k_3$ vorgegebene und insbesondere durch vorherige Eichung bestimmte Konstante darstellen und die Bedingungen

$$k_0, k_2, k_3 \geq 0 \text{ und } k_1 > 0$$

gelten,
sowie

- eine Ausgabeeinrichtung, die den ermittelten Wert des Massenstroms oder der damit korrelierten Größe ausgibt.

Ferner kann eine Eingabe/Ausgabe-Einrichtung vorgesehen sein, zum Beispiel eine mit einem Bildschirmgerät verbundene Tastatur oder ein Keyboard.

Die erfindungsgemäße Vorrichtung zur Regelung von Massenströmen, wie oben erläutert, umfaßt, ebenso wie die Vorrichtung zur quantitativen Erfassung von Massenströmen, eine Sensoreinrichtung, eine Differenziereinrichtung und eine Einrichtung zur Ermittlung des Massenstroms oder einer damit korrelierten Größe aus dem Signal der 2. Ableitung und umfaßt ferner eine Steuereinrichtung, die nach einer vorgegebenen Charakteristik ein Steuersignal für ein Stellglied erzeugt, sowie ein Stellglied, das den Massenstrom oder eine damit korrelierte Größe im Sinne einer Regelung beeinflußt.

Diese Vorrichtung weist entsprechend auf:

- eine Sensoreinrichtung zur Erzeugung eines einer Eigenschaft oder Eigenschaften eines Massenstroms (dM/dt) einer Masse M oder einer damit korrelierten Größe zugeordneten elektrischen Signals (I(t)), die gegebenenfalls eine Einrichtung aufweist, mit der ein nichtelektrisches Signal in ein entsprechendes elektrisches Signal I(t) umgewandelt werden kann,

- eine Differenziereinrichtung, in der die 2. Ableitung $d^2I/dt^2$ des Signals I(t) gebildet wird,
- eine Einrichtung zur Bestimmung des Massenstroms (dM/dt) aus dem Signal der 2. Ableitung nach der Beziehung (i)

$$dM/dt = k_0 + k_1 \cdot d^2I/dt^2 + k_2 \cdot (d^2I/dt^2)^2 + k_3 \cdot (d^2I/dt^2)^3 \qquad (i),$$

worin $k_0$, $k_1$, $k_2$ und $k_3$ vorgegebene und insbesondere durch vorherige Eichung bestimmte Konstante darstellen und die Bedingungen

$$k_0, k_2, k_3 \geq 0 \text{ und } k_1 > 0$$

gelten,
als Istwert der Regelgröße,

- eine Steuereinrichtung, die nach einer vorgegebenen Charakteristik ein Steuersignal für ein Stellglied erzeugt, sowie
- ein Stellglied, das den Massenstrom (dM/dt) der Masse M oder einer damit korrelierten Größe beeinflußt.

Nach einer vorteilhaften Ausführungsform umfaßt die erfindungsgemäße Regelvorrichtung einen der Einrichtung zur Bestimmung des Massenstroms nachgeschalteten Vergleicher, der den Istwert des Massenstroms oder eine ihm proportionale Größe mit einem vorgegebenen und vorzugsweise prozeßoptimierten Schwellenwert vergleicht und Ausgangssignale abgibt, die für oberhalb und unterhalb des Schwellenwerts liegende Istwerte unterschiedlich sind, wobei die Steuereinrichtung so ausgebildet ist, daß sie für jeden Zustand des Ausgangssignals des Vergleichers eine von mehreren, vorzugsweise zwei, vorgegebenen Regelcharakteristiken auswählt oder für einen bestimmten Zustand des Ausgangssignals des Vergleichers eine Regelcharakteristik auswählt und für den anderen Zustand eine Schalteinrichtung betätigt, die einen unabhängigen Fremdregler, insbesondere einen Impedanz-Regler, einschaltet bzw. dessen Stellsignal anstelle des von ihr erzeugten Stellsignals dem Stellglied zuleitet.

Die Steuereinrichtung kann so ausgebildet sein, daß der Regler P-, PI-, PID- oder PDPI-Verhalten oder eine frei gewählte und vorzugsweise prozeßoptimierte Kennlinie aufweist und/oder nach dem Prinzip der Fuzzy-Logik arbeitet. Gleiches gilt unabhängig auch für einen vorhandenen Fremdregler, mit dem die erfindungsgemäße Vorrichtung kooperiert.

Nach einer besonders vorteilhaften Ausführungsform, die sich besonders für Lichtbogenöfen und Lichtbogenschweißeinrichtungen eignet, weist die erfindungsgemäße Regelvorrichtung ferner einen weiteren Vergleicher, der das elektrische Eingangssignal als Istwert mit einem vorgegebenen und vorzugsweise prozeßoptimierten Schwellenwert vergleicht, sowie ein logisches Verknüpfungsglied auf, vorzugsweise ein UND-Glied, das die Ausgangssignale der beiden Vergleicher zugeführt erhält und bei Erfülltheit des UND-Kriteriums, wenn also sowohl der Istwert des Massenstroms oder der ihm proportionalen Größe als auch der Istwert des elektrischen Stromsignals über den vorgegebenen Schwellenwerten liegen, ein Ausgangssignal an die Steuereinrichtung abgibt, aufgrund dessen die Steuereinrichtung eine vorgegebene Regelcharakteristik auswählt oder die Schalteinrichtung betätigt, die einen Fremdregler abschaltet bzw. die Weiterleitung seines Stellsignals an das Stellglied unterbricht, so daß dann das Stellglied während dieser Zeitdauer nicht betätigt wird, und bei Nichterfülltheit des UND-Kriteriums eine andere Regelcharakteristik auswählt oder den Fremdregler wieder zuschaltet.

Diese Ausführungsform ist besonders vorteilhaft, da sie es ermöglicht, vorhandene Regelsysteme von Lichtbogenöfen und Lichtbogen-Schweißeinrichtungen unverändert zu lassen, und durch temporäre Abschaltung des vorhandenen herkömmlichen Regelsystems eine Optimierung des Gesamtsystems mit Maximierung der Schmelzgeschwindigkeit und Minimierung des Energieverbrauchs ermöglicht, insbesondere, wenn die Schwellenwerte prozeßoptimiert sind, was durch einfache Versuche durchführbar ist.

Die erfindungsgemäße Regelvorrichtung kann ebenso wie die erfindungsgemäße Meßvorrichtung eine Ausgabeeinrichtung aufweisen, die vorzugsweise die nach einer vorgegebenen Zeitdauer durchgesetzte oder umgesetzte Masse, den Massenstrom oder die damit korrelierte Größe, einen nach einem vorgegebenen Kriterium ermittelten Endzustand des Massenstroms und/oder andere prozeßrelevante Größen und Parameter ausgibt.

Als Ausgabeeinrichtungen kommen insbesondere Anzeigeeinrichtungen, Drucker, Plotter, Warneinrichtungen, die ein optisches oder akustisches Signal abgeben können, insbesondere Grenzwertmelder, sowie Daten-Schnittstellen in Frage, mit denen die Ausgabeeinrichtung mit anderen Datenverarbeitungseinrichtungen verbindbar ist. Damit läßt sich die erfindungsgemäße Meß- und Regeleinrichtung in vorhandene Computersysteme integrieren.

Die Sensoreinrichtung, mit der ein dem Massenstrom zugeordnetes elektrisches Signal erfaßt wird, unterliegt im Rahmen der vorliegenden Erfindung im Prinzip keiner Einschränkung, da beliebige Sensortypen in Frage kommen, die ein eigenschaftskorreliertes oder eigenschaftsproportionales Ausgangssignal abgeben. Vorzugsweise handelt es sich dabei um Einrichtungen zur Messung von Spannungen, Strömen, Widerständen, der Leitfähigkeit, der Kapazität, der Induktivität, der optischen Drehung, der Transmission oder Extinktion, der Viskosität, der Lichtstreuung und dergleichen.

Zur Messung von Strömen, besonders bei Lichtbogenöfen und beim Lichtbogenschweißen, eignet sich eine Rogowski-Spule. Diese Spule liefert bekanntermaßen ein Ausgangssignal, das der ersten Ableitung des Stroms im von ihr umfaßten Leiter entspricht. Dieses Signal kann sowohl als solches weiterverarbeitet werden als auch vor der weiteren Signalverarbeitung integriert werden, wobei dann ein dem erfaßten Strom entsprechendes Signal vorliegt. Besonders vorteilhaft ist es jedoch, den beispielsweise in einer Elektrodenzuführungsleitung fließenden Strom dadurch zu messen, daß an zwei voneinander geeignet beabstandeten Punkten ein Meßwiderstand parallelgeschaltet wird, wobei der an diesem Meßwiderstand eintretende Spannungsabfal dem im Leiter fließenden Strom entspricht.

Geeignete Sensoreinrichtungen für die Erfassung optischer Signale sind optische Detektoren, welche die Strahlungsintensität bei einer vorgegebenen Wellenlänge oder innerhalb eines vorgegebenen Wellenlängenbereichs im IR-, UV- und/oder sichtbaren Spektralgebiet erfassen und entsprechende elektrische Ausgangssignale abgeben. Nachdem auch die Temperatur eine erfindungsgemäß erfaßbare Meßgröße ist, eignen sich für diesen Zweck auch Pyrometer, da beispielsweise für einen gegebenen Lichtbogenofen und gegebene Betriebsverhältnisse eine Korrelation zwischen der Temperatur und der Masseneinschmelzgeschwindigkeit hergestellt werden kann. Damit ist im Rahmen der Erfindung zugleich auch eine unabhängige Temperaturmessung möglich.

Als Sensoreinrichtungen eignen sich ferner auch akustische Detektoren, welche die Schallintensität innerhalb eines vorgegebenen Frequenzbereichs erfassen und entsprechende Ausgangssignale abgeben. So lassen sich beispielsweise mit Mikrophonen Abbindeprozesse beim Abbinden hydraulischer Materialien, wie Gips, Kalk, Zement und dergleichen, erfassen und nach dem erfindungsgemäßen Verfahren einem entsprechenden virtuellen Massenstrom zuordnen, da der Abbindevorgang mit Mikrokristallisationsprozessen verknüpft ist, die akustisch erfaßt werden können. Gleiches gilt auch für die Erfassung tektonischer Massenverschiebungen in der Erdkruste, die sich ja bekanntermaßen durch Geräusche im Bereich niederer Frequenzen äußern. Die erfindungsgemäße Analyse solcher Geräusche und die Auswertung über die 2. Ableitung entsprechender Signale erlaubt eine empfindliche Voraussage über bestehende Strömungen und Strömungstendenzen, so daß prinzipiell auf dieser Basis kurzfristige Voraussagen von Massenströmen bzw. Massenstromänderungen, also beispielsweise von Erdbeben, möglich sind.

Abbindeprozesse bei hydraulischen Materialien lassen sich auch besonders vorteilhaft durch Messung der Leitfähigkeit oder des Widerstands oder des spezifischen Widerstands solcher Systeme verfolgen. So genügt es beispielsweise, in ein hydraulisch abbindendes System oder ein analoges Testsystem gleicher Zusammensetzung zwei Elektroden einzubringen und aus dem durch das System fließenden Strom oder dem Widerstand das Signal der 2. Ableitung abzuleiten, das dann zur Erfassung des Abbindeendes, des Zeitpunkts der Erreichung bestimmter Festigkeitswerte und anderer sich zeitlich ändernder Eigenschaften sowie zur Regelung solcher Systeme herangezogen werden kann. Die Regelung kann beispielsweise über das Temperaturregime, also durch Heizen und/oder Kühlen, erfolgen.

Signale, die mit einem realen oder virtuellen Massenstrom korreliert sind, lassen sich auch dadurch gewinnen, daß das betreffende gemessene System, bei dem z.B. die Leitfähigkeit oder ein durch das System fließender elektrischer Strom, etwa bei konstanter Spannung, gemessen wird, einer extern aufgebrachten physikalischen Beanspruchung oder Modulation unterzogen wird. Dies kann vorteilhaft durch Einwirkung einer in geeigneter Weise ausgelösten Stoßwelle und anschließender Auswertung des Meßsignals oder durch Aufprägung von Schwingungen, etwa im Bereich von 0 bis 100 kHz, und Erzeugung der 2. Ableitung des Meßsignals in Abhängigkeit von der Schwingungsfrequenz erfolgen. Bei einem derartigen Frequenzscan treten bei abbindenden hydraulischen Systemen bei bestimmten Frequenzen bzw. innerhalb bestimmter Frequenzbereiche Peaks der 2. Ableitung auf, die einer zeitlichen Veränderung im Verlauf des Abbindeprozesses unterliegen. Sowohl die Realwerte als auch ihre zeitliche Veränderung können zur Erfassung charakteristischer Zeitpunkte wie des Abhärteendes oder der Erreichung bestimmter Festigkeitswerte und zur entsprechenden Regelung herangezogen werden, wobei die Peakwerte in manchen Fällen direkt mit Selbstanzeigeeigenschaften korrelierbar sind, z.B. mit der Konzentration an bestimmten Ionen.

Ein besonders interessantes Anwendungsgebiet ist die Seismik, wobei zur Auslösung von Antwortsignalen sowohl übliche Sprengverfahren als auch beispielsweise künstliche wie auch natürliche elektrische Entladungen herangezogen werden können. Natürlich auftretende Blitze besitzen ein breites Frequenzspektrum, das typischerweise Frequenzen bis etwa 130 kHz umfaßt. Die durch Blitzeinschlag ausgelösten Antwortsignale werden in geeigneter Weise erfaßt, worauf ihre 2. Ableitung beispielsweise einem virtuellen oder realen Massenstrom oder einem gegebenen physikalischen Zustand des Systems zugeordnet wird. Der Vergleich aktueller Werte der 2. Ableitung mit früheren Werten erlaubt so eine Messung von physikalischen Veränderungen und entsprechende Prognosen.

Geeignete Sensoren zur Erfassung strömender Fluids sind z.B. ohne Kontakt mit dem Medium arbeitende Vorrichtun- . gen, z.B. induktive Aufnehmer, die mit einem Frequenzgenerator gekoppelt sind und in Form einer Spule das strömende Medium umschließen. Da die Resonanzfrequenz, die etwa im Bereich von 100 kHz bis 10 MHz liegen kann, von Art und Strömungsgeschwindigkeit des Mediums abhängt, kann aus einer entsprechenden Frequenzänderung das Meßsignal abgeleitet werden. Besonders vorteilhaft und einfach ist es, anstelle der Frequenzänderung die Änderung des Stroms im Meßkreis über einen Widerstand zu erfassen, dessen 2. Ableitung dann mit dem Massenstrom korreliert ist.

Die erfindungsgemäßen Vorrichtungen können Gleichrichter aufweisen, um entsprechende Wechselstrom- bzw. Wechselspannungssignale vor der Signalverarbeitung gleichzurichten. Falls die Vorrichtung einen A/D-Wandler aufweist, der ein analoges Eingangssignal digitalisiert, kann die Gleichrichterfunktion darin bereits implementiert sein.

Die erfindungsgemäßen Vorrichtungen können daneben auch Filter aufweisen, um unerwünschte Frequenzen, wie etwa die Netzfrequenz und unerwünschte hochfrequente Anteile, zu eliminieren und so die Selektivität der Signalerfassung zu erhöhen. Besonders geeignet sind digitale Filter, da sie es erlauben, beliebige Durchlaßkennlinien zu realisieren.

Die erfindungsgemäßen Vorrichtungen können ferner auch Einrichtungen zur Signalmittelung aufweisen, mit denen das Eingangssignal bzw. das Signal der 2. Ableitung einer Mittelung unterzogen wird. Diese Mittelungseinrichtungen können dabei so ausgebildet sein, daß sie eine Mittelung nach den oben angegebenen Beziehungen (ii) bzw. (iii) durchführen.

Die erfindungsgemäßen Vorrichtungen sind vorzugsweise digitale Mikroprozessorsysteme, die eine zentrale Recheneinheit (CPU), einen Festwertspeicher (ROM), einen Schreib-Lesespeicher (RAM), eine Schnittstelle (I/O) sowie ein Bussystem und gegebenenfalls ein Keyboard und eine Ausgabeeinrichtung aufweisen, wobei die CPU die Signalverarbeitungen der Differentiation, der Mittelwertbildung, der Ermittlung des Massenstroms bzw. ihm entsprechender Größen, der Vergleichsbildung, der Steuerung des Stellglieds, der Signalfilterung, der Steuerung der Schnittstelle und/oder der Kommunikation mit einem Keyboard insbesondere aufgrund von im ROM abgelegten Programmen unter Verwendung des RAM und des Bussystems steuert. Derartige Systeme sind dem Fachmann geläufig, so daß eine detailliertere Beschreibung nicht erforderlich ist.

Besonders geeignet sind im Rahmen der Erfindung sogenannte adaptive bzw. lernende Systeme, das heißt Systeme, deren z.B. in Kennlinien bzw. Kennfeldern abgelegte Regelcharakteristik bei Änderung von Parametern entsprechend automatisch geändert wird, so daß, etwa bei Sensoralterung, ein optimales Regelverhalten aufrechterhalten werden kann. Derartige selbstlernende Regelsysteme sind dem Fachmann auf dem Gebiet der Regeltechnik geläufig.

Die Erfindung wird im folgenden anhand von Ausführungsbeispielen unter Bezug auf die Zeichungen näher erläutert; es zeigen:

Fig. 1:   eine Sensoreinrichtung zur Erfassung des in einer Hochstromleitung, zum Beispiel eines Lichtbogenofens, fließenden Elektrodenstroms;

Fig. 2:   eine erfindungsgemäße Vorrichtung zur Erfassung von Massenströmen;

Fig. 3:   eine erfindungsgemäße Vorrichtung zur Regelung von Massenströmen, insbesondere für Lichtbogenöfen, die sich in herkömmliche Lichtbogenofen-Regelsysteme implementieren läßt;

Fig. 4:   eine konkrete Ausführungsform des Vorrichtungstyps von Fig. 3;

Fig. 5:   Signaldiagramme, die sich auf die Signalverarbeitung in Vorrichtungen gemäß den Fig. 2, 3 und 4 beziehen;

Fig. 6:   ein Diagramm, das den zeitlichen Verlauf der Temperatur und des festen Anteils in der Schmelze in einem Lichtbogenofen zeigt;

Fig. 7:   eine Registrierkurve, welche die Massenschmelzgeschwindigkeit in Abhängigkeit von der Zeit bei einer Schweißeinrichtung zeigt, sowie

Fig. 8:   eine erfindungsgemäße Sensoreinrichtung zur Erfassung von Massenströmen (Durchsätzen) in Behältern, Leitungen, Reaktoren etc..

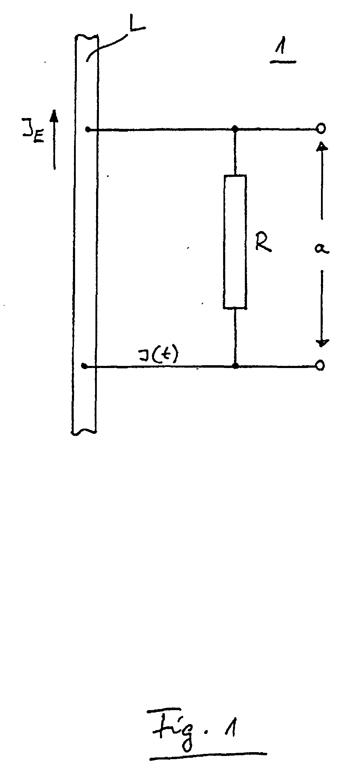

In Fig. 1 ist eine insbesondere für Lichtbogenöfen und Lichtbogen-Schweißeinrichtungen geeignete Sensoreinrichtung 1 dargestellt, mit welcher der Elektrodenstrom $I_E$ erfaßt werden kann, der durch den Leiter L fließt, der mit der Elektrode verbunden ist.

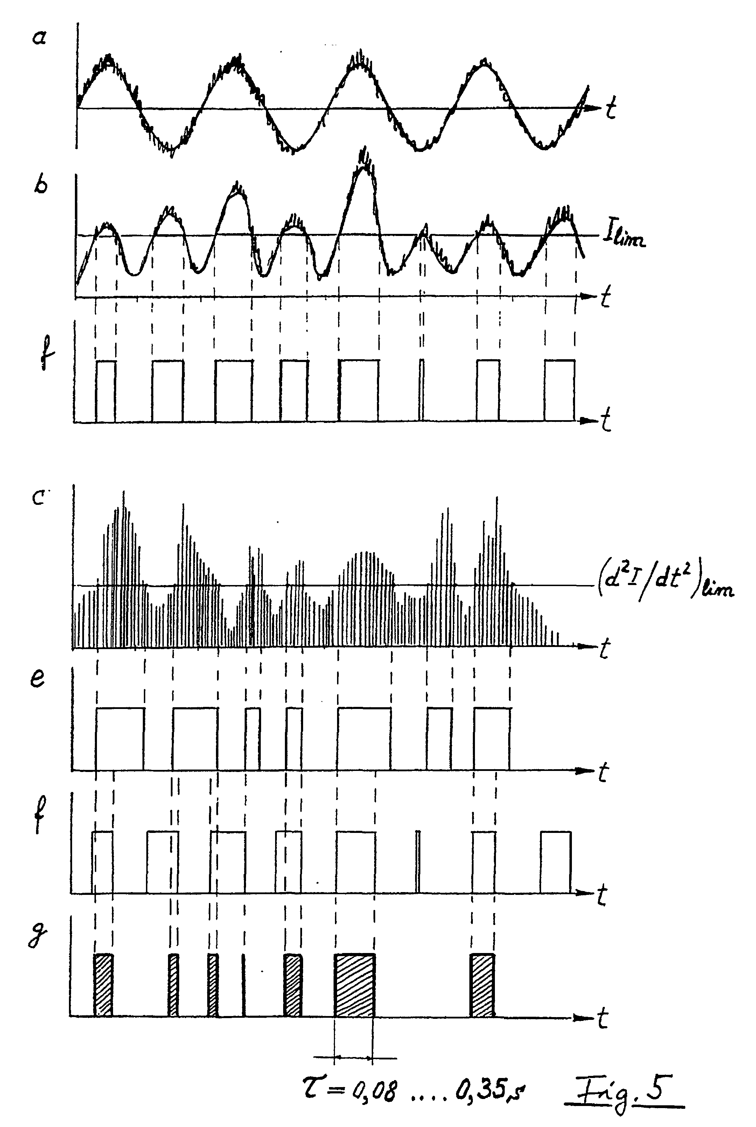

Die Sensoreinrichtung umfaßt einen Meßwiderstand R, der an zwei voneinander beabstandeten Punkten mit dem Leiter L verbunden ist, so daß sich aufgrund des durch den Meßwiderstand R fließenden Teilstroms I(t) ein entsprechender Spannungsabfall a am Meßwiderstand R ausbildet, der dem Strom I(t) und damit dem Elektrodenstrom $I_E$ proportional ist. Der Meßwiderstand R ist vorteilhaft ein induktionsfreier Widerstand. Diese Sensoreinrichtung ist wesentlich einfacher aufgebaut als etwa eine Rogowski-Spule, deren Ausgangssignal einer anschließenden Signalaufbereitung durch Integration bedarf. Der Stromsensor von Fig. 1 liefert an den beiden Anschlüssen ein dem Strom proportionales Spannungssignal, dessen Signalverlauf für das Beispiel eines Lichtbogenofens der Kurve a von Fig. 5 entspricht. Die Sensoreinrichtung von Fig. 1 bildet, wie Kurve a von Fig. 5 zeigt, den Stromverlauf einschließlich der Fluktuationen und chaotischen Störsignale ab, wie er beispielsweise in einem Oszillographenbild sichtbar wird.

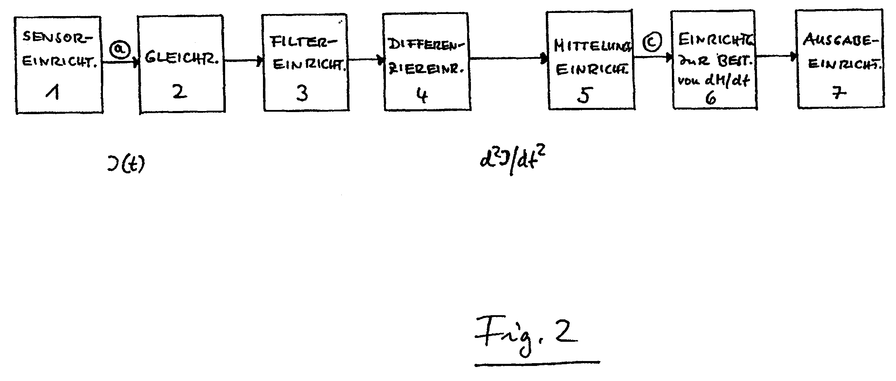

Fig. 2 stellt eine erfindungsgemäße Vorrichtung zur quantitativen Erfassung von Massenströmen dar, die sich in diesem Konzept für beliebige Arten von Massenströmen eignet, wie oben erläutert ist.
Die Vorrichtung umfaßt eine Sensoreinrichtung 1, die etwa der von Fig. 1 entspricht und ein Stromsignal (a) abgibt. Das Stromsignal, das mit einer Eigenschaft der strömenden oder sich umsetzenden Masse verknüpft ist, wird dann, wenn es sich um ein Wechselstromsignal handelt, in einem Gleichrichter 2 gleichgerichtet und kann in einer Filtereinrichtung 3 einer Filterung unterzogen werden, wodurch beispielsweise unerwünschte Netzfrequenzanteile oder auch unerwünschte hochfrequente Signalanteile ausgefiltert werden können. Dem Fachmann ist geläufig, daß diese Filter sowohl diskrete und beispielsweise analog arbeitende Filter als auch digitale Filter sein können, die beliebige und an den jeweiligen Anwendungsfall anpaßbare Durchlaßkennlinien aufweisen können.

Das gefilterte Signal gelangt dann zu einer Differenziereinrichtung 4, wo das Stromsignal I(t) zweimal nach der Zeit differenziert, also die 2. Ableitung $d^2I/dt^2$ gebildet wird. Das Ausgangssignal der Differenziereinrichtung 4, das in zahlreichen Fällen bereits dem Massenstrom entspricht bzw. eine ihm proportionale Größe darstellt, kann anschließend in einer Mittelungseinrichtung 5 einer Signalmittelung unterzogen werden, die nach einem beliebigen mathematischen Mittelungsverfahren erfolgen kann. Vorteilhaft erfolgt die Mittelung, besonders, wenn es sich um Stromsignale aus Lichtbogenplasmen handelt, durch quadratische Mittelung nach der oben angegebenen Beziehung (ii). Hierdurch wird eine Glättungswirkung erzeugt, die bei geeigneter Wahl der Integrationsdauer keinen relevanten Informationsverlust beim Signal der 2. Ableitung mit sich bringt.

Das gemittelte Signal entspricht beispielsweise Kurve c von Fig. 5. Bei diesem Signal handelt es sich um den Erfassungszeitpunkten beim Stromsignal I(t) zugeordnete Signale der 2. Ableitung $d^2I/dt^2$ in gemittelter Form, welche gewissermaßen die Tendenzinformation über den Verlauf der Stromkurve I(t) beinhalten. Dieses Signal gelangt dann in eine Einrichtung 6 zur Bestimmung des Massenstroms, die das Signal der 2. Ableitung nach der Beziehung (i) verarbeitet, um so z.B. eine Eichung auf entsprechende Absolutwerte der Masse bzw. des Massenstroms vorzunehmen. Der Einrichtung 6 ist eine Ausgabeeinrichtung 7 nachgeschaltet, welche die Signale in einer geeigneten Form ausgibt, beispielsweise in Form einer Anzeige, als Ausdruck über einen Drucker oder Plotter, als akustische oder optische Warnung oder über ein Interface, um die Ausgangssignale in andere Datenverarbeitungseinrichtungen einspeisen und mit diesen kommunizieren zu können. Bei digitaler Ausführung der Vorrichtung von Fig. 2, die erfindungsgemäß bevorzugt ist, ist, wenn es sich bei der Sensoreinrichtung 1 um eine analoge Einrichtung handelt, ein A/D-Wandler vorzusehen, der, etwa in Kombination mit einem Interface, die Signalumformung vornimmt, wobei gleichzeitig eine Signalgleichrichtung erfolgen kann. Bei Ausführung der Vorrichtung von Fig. 2 in Form einer mikroprozessorgesteuerten Vorrichtung können die Funktionen der Funktionsblöcke 2, 3, 4, 5 und 6 sowie teilweise auch Funktionen der Ausgabeeinrichtung 7 vom Mikroprozessorsystem übernommen werden, wie dem Fachmann auf dem Gebiet der Computertechnik geläufig ist. Die Vorrichtung kann jedoch auch als analog arbeitende Vorrichtung mit diskreten Komponenten konzipiert sein.

Der Gleichrichter 2, der ein Einweg- oder ein Zweiweggleichrichter sein kann, sowie die Filtereinrichtung 3 sind keine zwingend erforderlichen Komponenten. Ihre Realisierung hängt vom jeweiligen Anwendungsfall ab. Die Filtereinrichtung 3 kann ferner auch vorteilhaft mit der Differenziereinrichtung 4 integriert sein.

Mit einer Vorrichtung nach Fig. 2 lassen sich beispielsweise Schweißvorgänge oder Schneidvorgänge, die mit Trennschweißeinrichtungen durchgeführt werden, aufgrund von quantitativen Massenstrommessungen protokollieren, wobei jeder Punkt der entstandenen Schweißraupe bzw. der abgeschmolzenen Trennfläche über die Zeit mit dem von der Vorrichtung erfaßten Massenstrom korreliert ist, so daß der Zustand der Schweißraupe unmittelbar aus einem entsprechenden Diagramm der Ausgabeinrichtung 7 ersichtlich ist. Versuche haben ergeben, daß beispielsweise die Dicke der Schweißnaht an bestimmten Punkten, die bei gegebener Schweißgeschwindigkeit bestimmten Zeitpunkten entsprechen, genau mit dem erfindungsgemäß bestimmten Massenstrom und der daraus resultierenden Schweißraupendicke korreliert ist. Mit dieser Vorrichtung lassen sich entsprechende Vorgänge gewissermaßen tomographisch protokollieren.

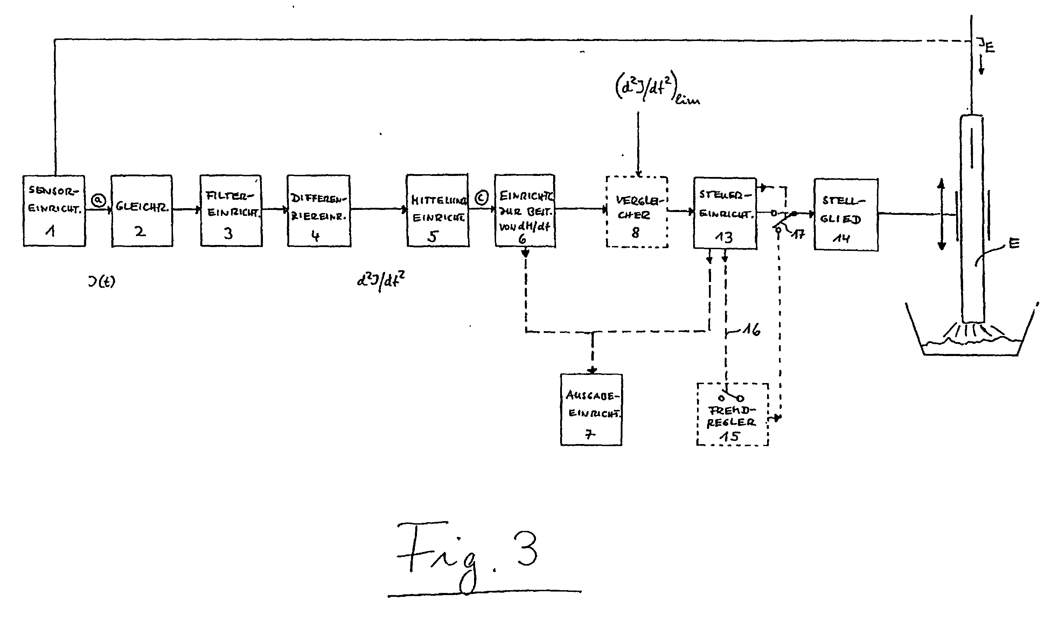

Die in Fig. 3 dargestellte Vorrichtung ist eine erfindungsgemäße Regelvorrichtung, mit der Massenströme nicht nur quantitativ erfaßt, sondern auch, durch Einwirkung auf den Massenstrom in einem geschlossenen Regelkreis, geregelt werden können. Dementsprechend umfaßt die Vorrichtung von Fig. 3 die gleichen Bausteine zur Signalerfassung und Aufbereitung, also eine Sensoreinrichtung 1, an deren Ausgang das Stromsignal a vorliegt, einen Gleichrichter 2, der das Signal der Sensoreinrichtung 1 gleichrichtet, eine nachgeschaltete Filtereinrichtung 3, eine anschließend vorgesehene Differenziereinrichtung 4, welche die 2. Ableitung des gefilterten Signals bildet, eine Mittelungseinrichtung 5, an deren Ausgang das gemittelte und Abtastzeitpunkten entsprechende zweifach differenzierte Signal $d^2I/dt^2$ vorliegt, sowie eine Einrichtung 6 zur Bestimmung des Massenstroms, deren Ausgangssignal nun als Istwert der Regelgröße dient. Die Steuereinrichtung 13 stellt eine Steuerlogik dar, die aufgrund einer vorgegebenen oder wählbaren Regelcharakteristik und auf der Basis vorgebbarer Sollwerte entsprechende Ausgangssignale für die Stellgröße abgibt, die einem Stellglied 14 zugeführt wird, das seinerseits auf den Massenstrom einwirkt, aus dem die Regelgröße abgeleitet wurde. Als Stellglieder 14 kommen beliebige und an sich bekannte Stellglieder in Frage, also beispielsweise Durchsatzsteller, Mengensteller, Stromsteller, insbesondere auf der Basis von Thyristorschaltungen, aber auch Dosiereinrichtungen und dergleichen, um beispielsweise in Fällen, in denen der Massenstrom mit einer chemischen Umsetzung korreliert ist, durch Steuerung einer Dosiereinrichtung die Geschwindigkeit der chemischen Umsetzung, etwa bei Polymerisationsvorgängen, und damit den Massenstrom zu beeinflussen.

In Fig. 3 ist zwischen der Einrichtung 6 zur Bestimmung des Massenstroms und der Steuereinrichtung 13 ein gestrichelt dargestellter Vergleicher 8 angedeutet, dem ein Referenzsignal $((d^2I/dt^2)_{lim})$ zugeführt wird. Dieser Refe-renzwert kann beispielsweise einem Maximalwert entsprechen, bis zu dem eine bestimmte Regelung unter bestimmter Regelcharakteristik durchgeführt werden kann, und oberhalb dessen eine andere Regelcharakteristik angewandt werden muß, beispielsweise, um drohende Instabilitäten durch eine entsprechende Regelung zu kompensieren. Der Vergleicher 8 gibt ein dem Vergleichsergebnis entsprechendes Ausgangssignal an die Steuereinrichtung 13 ab, die eine entsprechende Schalteinrichtung 16, 17 betätigen kann, mit der etwa ein vorhandener Fremdregler 15 bzw. dessen Stellsignal, das dem Stellglied 14 zugeführt wird, geschaltet werden kann. Mit dieser Vorrichtung ist es beispielsweise möglich, bei einer Lichtbogeneinrichtung dann, wenn das Signal der 2. Ableitung unterhalb eines Schwellenwerts $(d^2I/dt^2)_{lim}$ liegt, über einen vorhandenen Fremdregler 15 die Ansteuerung des Stellglieds 14 vornehmen zu lassen, wobei der Fremdregler 15, der beispielsweise eine konventionelle Regeleinrichtung sein kann, eine vorgegebene Regelcharakteristik besitzt. Aufgrund eines entsprechenden Ausgangssignals vom Vergleicher 8 schaltet z.B. die Steuereinrichtung 13 den Schalter 17 dann so, daß das Stellsignal vom Fremdregler 15 zum Stellglied 14 gelangt, also die Regelung ausschließlich über den Fremdregler 15 erfolgt.

Wenn andererseits das Ausgangssignal des Vergleichers 8 anzeigt, daß der Wert der 2. Ableitung oberhalb des vorgegebenen Schwellenwerts liegt, wird der Fremdregler 15 über die Schalteinrichtung 16 abgeschaltet oder über den Schalter 17 das Stellglied 14 signalmäßig an die Steuereinrichtung 13 angeschlossen, so daß es das von der Steuereinrichtung 13 kommende Stellsignal erhält, das auf einer anderen Regelcharakteristik beruht. Im Grenzfall kann diese andere Regelcharakteristik bedeuten, daß das Stellglied 14 dauernd abgeschaltet oder dauernd eingeschaltet wird. Im Fall eines Lichtbogenofens oder einer Lichtbogenschweißung entspricht das Stellglied 14zum Beispiel der Antriebsvorrichtung der Lichtbogenelektrode E bzw. Schweißelektrode; in diesem Fall würde die Steuereinrichtung 13 das Stellglied 14 bei Überschreitung des Schwellenwerts der 2. Ableitung abschalten. Es sind jedoch auch Fälle denkbar, wo das Stellglied, wenn zum Beispiel eine Retraktion der Elektrode E vorgesehen ist, in diesem Fall kontinuierlich angesteuert wird, um ein rasches Zurückziehen der Elektrode und damit eine Reduktion der Absolutstromstärke und des Wertes der 2. Ableitung zu erzielen.

Unabhängig davon kann die Vorrichtung von Fig. 3 auch eine Ausgabeeinrichtung 7 enthalten, welche die gleichen Funktionen wie die Ausgabeeinrichtung 7 von Fig. 2 aufweisen kann. Sie kann an beliebigen Stellen der Vorrichtung angeschlossen sein, günstigerweise auch umschaltbar, um so alle Stadien der Signalverarbeitung auch über die Ausgabeeinrichtung verfolgen und entsprechende Signale weiterverarbeiten und speichern zu können.

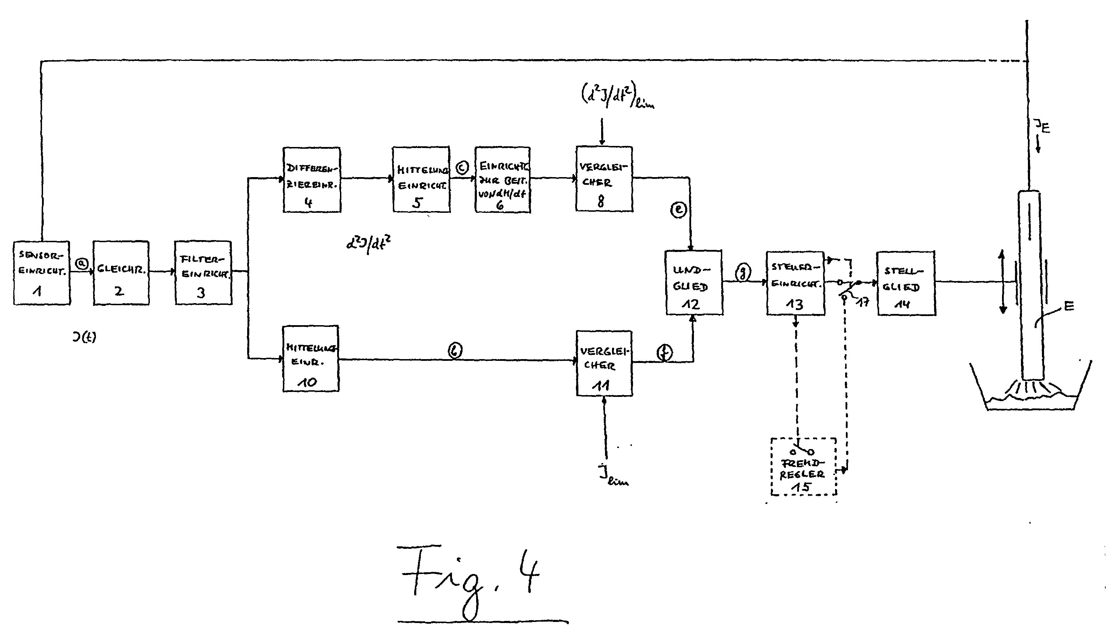

Die in Fig. 4 dargestellte erfindungsgemäße Regeleinrichtung stellt eine vorteilhafte Weiterbildung der Regeleinrichtung von Fig. 3 dar und eignet sich insbesondere für die Regelung der Elektrodennachführung von Lichtbogenöfen und Schweißeinrichtungen, die bereits mit einer herkömmlichen Regeleinrichtung ausgerüstet sind, die aus funktionellen oder wirtschaftlichen Gründen nicht durch eine vollständig neue Regelung ersetzt werden soll. Die Regeleinrichtung von Fig. 4 unterscheidet sich von der Regeleinrichtung der Fig. 3 prinzipiell dadurch, daß die Entscheidung, ob die herkömmliche Regeleinrichtung, der Fremdregler 15, die Stellgliedansteuerung und damit die Regelung durchführt oder nicht, nicht nur durch Vergleich der 2. Ableitung mit einem Schwellenwert, sondern auch durch Vergleich des nicht nach der Zeit differenzierten Stromsignals I(t) mit einem entsprechenden Schwellenwert und logische Verknüpfung der beiden Vergleichsergebnisse erfolgt.

Die Sensoreinrichtung 1 umfaßt den durch die Elektrode E und das Lichtbogenplasma fließenden Strom, etwa durch eine Einrichtung gemäß Fig. 1. Hierbei resultiert wiederum das starke Fluktuationen und Störungen aufweisende Stromsignal a, wie in Fig. 5 dargestellt. Nach Gleichrichtung im Gleichrichter 2 und Filterung in der Filtereinrichtung 3 gelangt das Stromsignal durch die gleichen Verarbeitungsstufen wie bei der Vorrichtung von Fig. 3, wird also in der Differenziereinrichtung 4 differenziert, in der nachgeschalteten Mittelungseinrichtung 5 gemittelt, in der Einrichtung 6 einer Normierung unterzogen und dann dem Vergleicher 8 zugeleitet, wo das Signal der 2. Ableitung, $d^2I/dt^2$, mit einem Schwellenwert $(d^2I/dt^2)_{lim}$ verglichen wird. Kurve c in Fig. 5 stellt, ebenso wie bei den Vorrichtungen der Fig. 2 und 3, den Verlauf des gemittelten Signals der 2. Ableitung dar, wobei die einzelnen Signale den Erfassungszeitpunkten entsprechen, zu denen das Stromsignal zur Bildung der 2. Ableitung erfaßt wird. Dabei ist, wie bei den Vorrichtungen der Fig. 2 und 3, das Shannon-Theorem zu beachten, um zu vermeiden, daß durch ungünstige Wahl der Erfassungszeitpunkte die Information über die erfaßten Stromfluktuationen teilweise oder vollständig verlorengeht. Diese Maßnahme ist dem Fachmann geläufig und bedarf daher keiner weiteren Erläuterung.

In dem Diagramm c von Fig. 5 ist der Grenzwert $(d^2I/dt^2)_{lim}$ als zur Abszisse parallele Linie eingetragen. Der Vergleicher 8 gibt entsprechend ein Ausgangssignal ab, wenn die Werte der 2. Ableitung über dem vorgegebenen Schwellenwert liegen; dieses Ausgangssignal ist unter e in Fig. 5 dargestellt. Entsprechend liegt ein Ausgangssignal des Vergleichers 8 vor, solange das Signal der 2. Ableitung des Diagramms c oberhalb des eingetragenen Schwellenwerts liegt. Um fehlerhafte Regelvorgänge zu vermeiden, ist es vorteilhaft, den Vergleicher 8 so zu konzipieren, daß er nur dann ein Ausgangssignal abgibt, wenn während einer vorgegebenen Mindestzeitdauer oder für eine vorgegebene Mindestanzahl von Einzelsignalen der 2. Ableitung oder der daraus berechneten Größe eine Überschreitung des Schwellenwerts vorliegt.

Das gefilterte Stromsignal gelangt bei der Vorrichtung von Fig. 4 ferner in eine Mittelungseinrichtung 10, die, ebenso wie die Mittelungseinrichtung 5, nach beliebigen Mittelungsverfahren arbeiten kann, wobei auch für den Strom die quadratische Mittelung nach der oben erläuterten Beziehung (iii) für den vorliegenden Fall besonders vorteilhaft ist. Das gemittelte Signal ist im Diagramm b in Fig. 5 dargestellt. In diesem Diagramm ist ferner der Grenzwert $I_{lim}$ als Parallele zur Abszisse dargestellt, aufgrund dessen der nachgeschaltete Vergleicher 11 entscheidet, ob der von der Mittelungseinrichtung 10 kommende Wert des Stroms I oberhalb oder unterhalb des Schwellenwerts $I_{lim}$ liegt. Der Vergleicher 11 gibt ein Ausgangssignal ab, wenn der erfaßte Wert des Stroms I oberhalb des Schwellenwerts $I_{lim}$ liegt. Auch der Vergleicher 11 ist vorteilhaft so konzipiert, daß er, wenn der Strom den Schwellenwert überschreitet, nur dann ein entsprechendes Ausgangssignal abgibt, wenn diese Überschreitung während einer vorgegebenen Mindestdauer oder für eine vorgegebene Mindestanzahl erfaßter Einzelsignale vorliegt. Das entsprechende Ausgangssignal des Vergleichers 11 für diesen Fall ist in Diagramm f von Fig. 5 dargestellt.

Zwischen den Vergleichsausgangssignalen des Diagramms e und den Vergleichsausgangssignalen des Diagramms f liegt, wie ersichtlich, nur eine partielle Überlappung vor, da das Signal des Diagramms f dem primären Stromverlauf und das Signal des Diagramms e dem Verlauf der 2. Ableitung zugeordnet ist, die folglich keinen zeitlich kongruenten Verlauf aufweisen können.

Das Ausgangssignal e des Vergleichers 8 und das Ausgangssignal f des Vergleichers 11 werden in einem logischen Verknüpfungsglied 12, das vorzugsweise ein UND-Glied darstellt, miteinander verknüpft.

Für den Fall einer UND-Verknüpfung resultiert das in Diagramm g von Fig. 5 dargestellte Ausgangssignal, das eine Doppelinformation enthält, nämlich über das gleichzeitige Vorliegen eines über dem Schwellenwert liegenden Stroms und eines über dem Schwellenwert liegenden Wertes der 2. Ableitung des Stroms, und zwar für jeden Erfassungszeitpunkt bzw. jedes entsprechende Zeitintervall.

Im Gegensatz dazu wird bei der Vorrichtung von Fig. 3 nur die Schwellenwertüberschreitung des Signals der 2. Ableitung im Vergleicher 8 geprüft.

Diese Vorgehensweise ist für praktische Zwecke in den meisten Fällen ausreichend, da die 2. Ableitung gewissermaßen eine Frühanzeige von Tendenzen der Stromänderung darstellt, also diesbezüglich einen höheren Informationswert aufweist als das Stromsignal selbst.

Auf der anderen Seite ist es gerade bei Lichtbogenöfen erforderlich, daß auch der durch die Elektrode fließende Strom vorgegebene Maximalwerte nicht überschreitet, da zum Beispiel lokale Überhitzungen vermieden werden müssen, die zu einem ungünstigeren Schmelzwirkungsgrad und zu ungünstigen ökologischen Effekten (Fluorfreisetzung aus dem Flußmittel) führen könnten. Die Vorrichtung von Fig. 4 eignet sich daher in ganz besonderer Weise zur Implementierung in vorhandene Lichtbogenofenanlagen und Lichtbogenschweißeinrichtungen, bei denen bereits nach dem Stand der Technik weitgehend optimierte Regeleinrichtungen (Fremdregler 15) vorliegen. Bei der Vorrichtung von Fig. 4 wird entsprechend in Abhängigkeit vom Ausgangssignal g des logischen Verknüpfungsglieds von der Steuereinrichtung 13 entschieden, ob die Regelung nach der Charakteristik des Fremdreglers 15 oder nach der eigenen Charakteristik durchgeführt werden soll, was wiederum durch den Schalter 17 angedeutet ist, der von der Steuereinrichtung 13 gesteuert ist. Auch bei der Vorrichtung der Fig. 4 kann die Steuereinrichtung 13 so konzipiert sein, daß sie bei Schwellenwertüberschreitung des Signals des Stroms wie auch des Signals der 2. Ableitung, also bei gegebenem Ausgangssignal g, nicht nach einer anderen, eigenen Regelcharakteristik weiterregelt, sondern die Stellgliedverstellung abschaltet. Selbstverständlich kann je nach Art des Antriebs der Elektrode E auch der umgekehrte Fall vorliegen, daß die Elektrode durch die entsprechende Servoeinrichtung rasch von der Schmelze zurückgezogen wird, um so eine Verringerung des Stroms und auch der Werte der 2. Ableitung zu erzielen.

In Fig. 5 ist bei Diagramm g angedeutet, daß die Signaldauer (Impulsbreite des Ausgangssignals g des logischen Verknüpfungsgliedes 12 bei der erläuterten Anwendung im Bereich von etwa 0,08 bis 0,35 s liegt. Diagramm g von Fig. 5 zeigt, daß das erfindungsgemäße Regelverfahren einen außerordentlich raschen und gleichzeitig kurzzeitigen Zugriff auf bestehende Lichtbogenofenregelungssysteme durchführt.

Die Vorrichtungen der Fig. 3 und 4 müssen selbstverständlich nicht so aufgebaut sein, daß sie mit einem Fremdregler 15 zusammenarbeiten. Die logische Steuereinrichtung 13 kann, wie oben im Zusammenhang mit dem erfindungsgemäßen Regelverfahren erläutert wurde, auch so konzipiert sein, daß sie in Abhängigkeit von der Art des Ausgangssignals des Vergleichers 8 bzw. des logischen Verknüpfungsglieds 12 zwischen zwei oder mehreren Regelcharakteristiken wählt, die einem nach dem jeweiligen Anwendungsfall frei wählbaren Regelverhalten entsprechen können. Dies ist besonders günstig bei computer- bzw. mikroprozessorgesteuerten Vorrichtungen möglich, da etwa aus Optimierungsprozessen stammende Parameter- und Variablenkombinationen in entsprechenden Kennfeldern des Mikroprozessorsystems abgespeichert werden können, die dann mit dem Vorteil eines extrem raschen Zugriffs von der Steuereinrichtung 13 verwendet werden können.

Die Vorrichtungen der Fig. 3 und 4 müssen selbstverständlich nicht so aufgebaut sein, daß sie mit einem Fremdregler 15 zusammenarbeiten. Die logische Steuereinrichtung 13 kann, wie oben im Zusammenhang mit dem erfindungsgemäßen Regelverfahren erläutert wurde, auch so konzipiert sein, daß sie in Abhängigkeit von der Art des Ausgangssignals des Vergleichers 8 bzw. des logischen Verknüpfungsglieds 12 zwischen zwei oder mehreren Regelcharakteristiken wählt, die einem nach dem jeweiligen Anwendungsfall frei wählbaren Regelverhalten entsprechen können. Dies ist besonders günstig bei computer- bzw. mikroprozessorgesteuerten Vorrichtungen möglich, da etwa aus Optimierungsprozessen stammende Parameter- und Variablenkombinationen in entsprechenden Kennfeldern des Mikroprozessorsystems abgespeichert werden können, die dann mit dem Vorteil eines extrem raschen Zugriffs von der Steuereinrichtung 13 verwendet werden können.

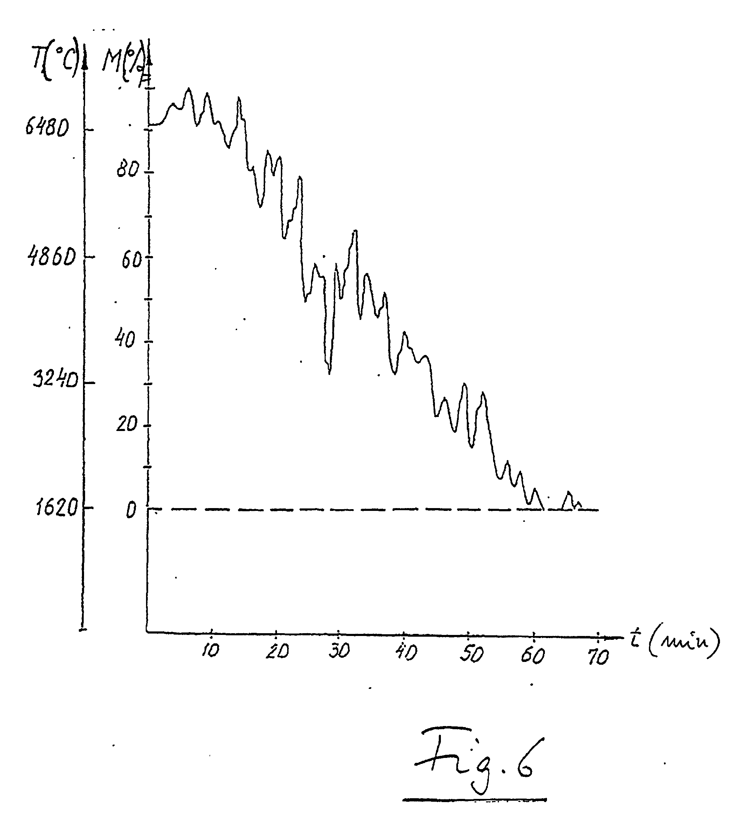

Fig. 6 zeigt das Ergebnis eines Schmelzvorgangs, der nach dem erfindungsgemäßen Regelverfahren mit einem Lichtbogenofen durchgeführt wurde. Bei diesem Versuch wurden 30 Chargen Stahlschrott eingeschmolzen. Fig. 6 zeigt den zeitlichen Verlauf der Temperatur T der Schmelze und der prozentualen Einschmelzung der festen Stahlmasse M. Die Anzeige, daß der Einschmelzvorgang beendet ist, kann vorteilhaft aufgrund des oben erläuterten Glattheitskriteriums ausgegeben werden, wobei der Einschmelzvorgang beendet ist, wenn der Kurvenverlauf hinreichend glatt ist. Bei den Versuchen wurde die Temperatur des geschmolzenen Flußmittels mit Thermoelementen nach dem Abkippen des oberen, auf Temperatur bis über 1800 °C erhitzten Schmelzguts gemessen. Die Temperatur lag stets im Bereich von 1620 ± 10 °C. Der Abstich erfolgte jeweils nicht später als zwei bis vier Minuten nach dem Einpegeln des Meß- bzw. Regelungsergebnisses auf den Wert 0 %, der erfindungsgemäß außerordentlich präzise erfaßt werden kann. Der Schmelzprozeß beginnt bei Temperaturen von mehr als 7000 °C, also Temperaturen, die der Temperatur des Lichtbogenplasmas entsprechen. Mit steigendem Volumen des flüssigen Anteils in der Schmelze nähert sich die Temperatur der Schmelztemperatur des resultierenden Flußmittels an. Durch das erfindungsgemäße Verfahren kann der Zeitpunkt, an dem die vorgegebene Temperatur von 1620 °C erreicht ist, sehr genau ermittelt werden, also der Zeitpunkt der Beendigung des Schmelzvorgangs. Fig. 6 zeigt, daß der Kurvenverlauf im Bereich des Einschmelzendes keine starken Schwankungen mehr aufweist, so daß eine sehr präzise Endpunkterkennung (M = 0 %) erfindungsgemäß möglich ist. Damit läßt sich erfindungsgemäß nicht nur die Schüttdichte des fertigen Flußmittels in vorgegebenen Grenzen (zum Beispiel 0,85 bis 1,0 kg/dm$^3$) stabilisieren, sondern auch der Endpunkt des Einschmelzvorgangs präzise festlegen, was wirtschaftlich außerordentlich vorteilhaft ist, da jede Wartezeit darüber hinaus mit einem unnötigen Energieverbrauch verbunden ist und die Produktivität des Ofens verringert. Damit kann frühestmöglich abgestochen oder nachchargiert werden. Durch die erfindungsgemäße Regelung, deren günstiger Verlauf aus Fig. 6 ersichtlich ist, läßt sich ferner auch eine lokale Überhitzung, die beispielsweise zu einer unerwünschten Zersetzung fluorhaltiger Flußmittel führen würde, sicher vermeiden, so daß Umweltrisiken dieser Art ausgeschaltet sind und entsprechende Material- und Energiekosten ebenfalls eingespart werden.

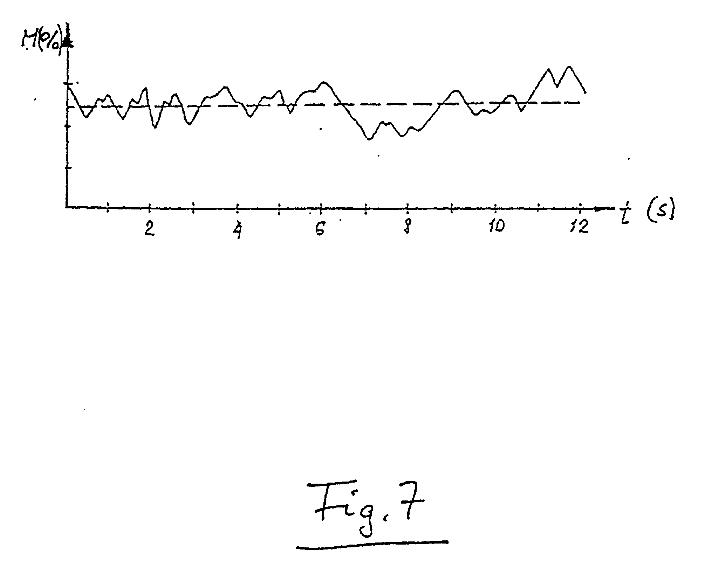

In Fig. 7 ist der zeitliche Verlauf der Massenschmelzgeschwindigkeit M in Abhängigkeit von der Zeit dargestellt. Die Erfassung der Massenschmelzgeschwindigkeit M erfolgte nach dem erfindungsgemäßen Verfahren unter Verwendung einer Vorrichtung gem. Fig. 2, also ohne Regelung des Schweißvorgangs. Fig. 7 zeigt, daß die Massenschmelzgeschwindigkeit in Abhängigkeit von der Zeit und damit von der Länge der Schweißraupe um einen Mittelwert pendelt, der gestrichelt dargestellt ist. Jeder Punkt der Kurve von Fig. 7 entspricht einem entsprechenden Punkt längs der Schweißraupe, wobei die aus dem Diagramm ablesbare Massenschmelzgeschwindigkeit mit der entsprechenden Dicke an dieser Stelle korreliert ist. Das erfindungsgemäße Verfahren stellt damit eine vorteilhafte Alternative und Ergänzung herkömmlicher defektoskopischer Methoden dar, mit denen die Güte einer Schweißnaht überprüft wird.

Darüberhinaus läßt sich der Schweißvorgang, wie oben im Detail erläutert, erfindunggemäß auch regeln, und zwar mit außerordentlich kurzen Zugriffszeiten, so daß durch Anwendung des erfindungsgemäßen Regelverfahrens und einer Vorrichtung etwa gemäß Fig. 3 oder gemäß Fig. 4 eine Annäherung der Massenschmelzgeschwindigkeitskurve an den gestrichelten Mittelwert und damit eine Erhöhung der Güte der Schweißnaht erreicht werden kann.

Analoges gilt auch für nichtmetallische Schweißungen, etwa Kunststoffschweißungen, bei denen die Gütebestimmung auf erheblich größere Schwierigkeiten stößt als bei metallischen Werkstoffen. Auch in diesen Fällen läßt sich auf der Basis eines geeigneten Signals sowohl eine genaue Protokollierung eines Schweißvorgangs als auch eine Regelung durchführen, wobei die Kombination von Protokollierung und Regelung besonders bevorzugt ist.

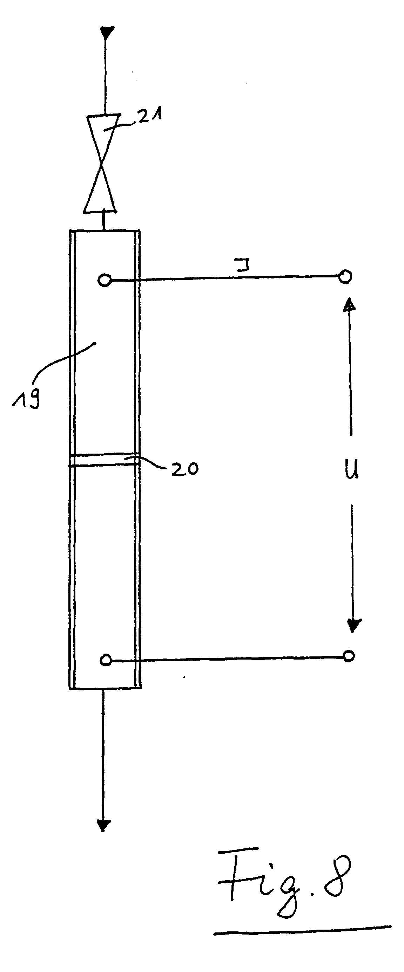

In Fig. 8 ist eine Vorrichtung schematisch dargestellt, mit der sich der Durchsatz strömender Medien auf der Basis des Erfindungskonzepts regeln läßt. An zwei voneinander beabstandeten Stellen eines von einem Fluid durchströmten Rohrs 19, das gegebenenfalls eine Einrichtung 20 zur galvanischen Trennung der beiden Rohrteile aufweist, wird ein elektrisches Signal abgegriffen, das als Strom I bzw. Spannung U angedeutet ist. Wie oben erläutert, kann es sich hierbei, je nach dem betreffenden Medium, um Leitfähigkeiten, sich ausbildende Potentiale oder nichtelektrische Größen handeln, die in elektrische Größen umgewandelt werden können. In allen Fällen handelt es sich um Signale, die mit dem dynamischen Zustand des strömenden Systems verknüpft sind und bei nichtströmendem System einen anderen Wert aufweisen. Nach erfindungsgemäßer Verarbeitung der Signale wird, etwa gemäß den Fig. 2 oder 3, ein Stellsignal erhalten, das einem Stellglied 21, im dargestellten Fall einem Ventil, zugeleitet wird, das den Massenstrom steuert. Auf diese Weise lassen sich auch Massenströme messen und regeln, die nach herkömmlichen Techniken nur schwierig erfaßt werden können, beispielsweise der Massendurchsatz bei Stranggießanlagen, der nach dem erfindungsgemäßen Verfahren hochpräzise geregelt werden kann. Als Primärsignale lassen sich auch vorteilhaft elektromagnetische Signale verwenden, etwa dann, wenn es sich um sich optisch verändernde Medien, reagierende Gemische oder zweiphasige Systeme handelt.

Die Erfindung läßt sich vorteilhaft auch auf Verfahren zur thermischen Behandlung von Materialien in Mikrowellenöfen anwenden, beispielsweise zur Messung, Oberwachung und/oder Regelung von Aufheizprozessen, etwa zur Entwässerung oder Trocknung von Produkten wie Lebensmitteln. Derartige Prozesse werden bekömmlicherweise so durchgeführt, daß die Präparate während einer vorgegebenen Zeitdauer, die stets etwas größer ist als die erforderliche Behandlungs- bzw. Trocknungsdauer, mit vorgegebener Mikrowellenleistung behandelt werden.

Ein Trocknungsvorgang verläuft dabei in der Regel nur makroskopisch kontinuierlich; mit dem erfindungsgemäßen Verfahren ist es möglich, den Ablauf des Trocknungsvorgangs mit hoher Auflösung zu erfassen und entsprechend zu regeln, z.B. über eine Verstellung der Mikrowellenleistung oder im Zweipunktverfahren über die Zu- und Abschaltung eines Teils oder der gesamten Mikrowellenleistung. Als Sensoreinrichtung kann dabei ein an sich bekannter Leistungsmesser (Wattmesser) dienen, oder es kann der im Primärkreis des Magnettons fließende Strom erfaßt werden. Aus diesen Signalen, vorteilhaft dem Magnetron-Versorgungsstrom, wird dann das Signal der 2. Ableitung gebildet, aus dem, gegebenenfalls nach Mittelung, der Endpunkt des Trocknungsvorgangs oder ein zur Regelung dienender Istwert der Regelgröße abgeleitet wird.

Die Anwendung des Erfindungskonzepts auf die Regelung von Brennkraftmaschinen, insbesondere die Lambda-Regelung, eröffnet ein weiteres interessantes Anwendungsgebiet. Aus dem Primärstrom oder dem Sekundärstrom der Zündspule läßt sich leicht ein entsprechendes Strom- bzw. Spannungssignal ableiten, dessen 2. Ableitung, gegebenenfalls nach der oben erläuterten Mittelung, der Zusammensetzung des Kraftstoff-Luft-Gemisches und damit dem Lambda-Wert zylinderspezifisch zugeordnet werden kann. Die Erfindung erlaubt damit eine zylinderspezifische direkte Lambda-Regelung unter Beeinflussung z.B. der Einspritzmenge und/oder des Ansaugluftdurchsatzes und/oder des Zündzeitpunktes ohne Signalverzögerung, wie sie bei herkömmlichen Lambda-Regelsystemen mit mehr oder weniger weit vom Verbrennungsort abliegender Lambda-Sonde unvermeidlich auftritt, wobei zugleich die Zylinderspezifität nicht durch rechnerische Signalzuordnung des Ausgangssignals einer Lambda-Sonde, sondern einfach der Dieselmessung am Zylinder erzielt wird.

Zusammenfassend führt die Erfindungskonzeption zu neuen Verfahren und Vorrichtungen zur quantitativen Erfassung und Regelung von Massenströmen. Über den wichtigen Anwendungsbereich der Regelung von Lichtbogenöfen und Lichtbogen-Schweißeinrichtungen hinaus läßt sich die Erfindung auf zahlreichen Gebieten vorteilhaft anwenden. Hierfür seien folgende Beispiele gegeben, deren Auflistung jedoch nicht einschränkend ist:

1. Elektrometallurgie:

-   Erfassung und Regelung der Badtemperatur, des Flüssigphasenanteils und/oder der Zusammensetzung der Schmelze, beispielsweise des Kohlenstoffgehalts;

-   Kontinuierliche chemische Analyse während des Schmelzvorgangs aufgrund von spektrometrischen Daten, die aus dem Plasma gewonnen werden;

-   Erfassung und Regelung der Zusammensetzung von Flußmitteln.

2. Schweißtechnologie:

-   'Tomographische' Kontrolle und Protokollierung von Schweißnähten während des Schweißprozesses;

-   Erfassung und Regelung der Menge des geschmolzenen Materials in der Schweißnaht;

-   Verfolgung metallurgischer Prozesse in Schweißnähten während der Schweißnaherzeugung;

- Prozeßoptimierung nach dem erfindungsgemäßen Verfahren.

3. Regelung und Steuerung von Brennkraftmaschinen:

- Erfassung und Regelung der Kraftstoffeinspritzung und Kraftstoffverbrennung.

4. Mineralwolleherstellung:

- Erfassung des Massenstroms der Schmelze;

- Erfassung und Regelung der Qualität der erzeugten Mineralfasern.

5. Rheologie:

- Ermittlung und Regelung rheologischer Materialeigenschaften;

- Ermittlung und Regelung der Viskosität von Flüssigkeiten.

6. Chemische Reaktionen, Reaktionskinetik:

- Erfassung und Regelung des Umsatzes chemischer Reaktionen, insbesondere von Polyreaktionen.

7. Bauindustrie:

- Erfassung und Regelung der Verfestigungsgeschwindigkeit und der Festigkeitsentwicklung von hydraulischen Materialien, wie Gips, Kalk und Zement, sowie von Polymersystemen.

8. Elektrolytische Prozesse:

- Erfassung und Regelung von Elektrolysevorgängen;

- Erfassung und Regelung von galvanotechnischen und galvanoplastischen Prozessen.

9. Elektroosmose:

- Erfassung und Regelung von Elektroosmoseprozessen, insbesondere in der analytischen und präparativen Biochemie, und besonders in der Proteinchemie.

10. Physikalische Untersuchungen an Materialien:

- Messung der Dichte von Materialien;

- Messung der Torsion und des Drehmoments an Wellen, beispielsweise von Motoren.

11. Biotechnologie:

- Erfassung und Regelung physikalisch-chemischer Parameter bei biologischen Flüssigkeiten, wie Blut, Serum und dergleichen;

- Erfassung und Regelung von Massenströmen auf der Basis von Zellsuspensionen oder Gewebesuspensionen, Erfassung chemischer Umsätze in derartigen Systemen.

12. Seismologie:

- Erfassung von tektonischen Vorgängen, die mit Materialverschiebung verbunden sind, insbesondere zur kurzfristigen Erdbebenvorwarnung.

Zusammenfassend ist festzustellen, daß die vorliegende Erfindung einen neuen Zugang zur messenden Erfassung wie auch zur Regelung dynamischer Systeme ermöglicht, die völlig neuartige industrielle Anwendungsmöglichkeiten eröffnet, wie aus den obigen Beispielen ersichtlich ist.

**Patentansprüche**

1. Verfahren zur quantitativen Erfassung von Massenströmen und/oder damit korrelierten Größen, das folgende Maßnahmen umfaßt:

(A) Erfassung eines einer Eigenschaft oder Eigenschaften des zu erfassenden Massenstroms (dM/dt) einer Masse M oder einer damit korrelierten Größe zugeordneten elektrischen Signals (I(t)) oder eines nichtelektrischen Signals, das in ein elektrisches Signal (I(t)) umgewandelt wird, zu einem oder mehreren vorgegebenen Zeitpunkten oder während der gesamten Dauer des Massenströmungsvorgangs, gegebenenfalls unter Beachtung des Shannon-Theorems bei der Wahl der Erfassungszeitpunkte,
(B) Erzeugung der 2. Ableitung $d^2I/dt^2$ des Signals I (t) und
(C) Bestimmung des Massenstroms (dM/dt) der Masse M bzw. einer damit korrelierten Größe nach der Beziehung (i):

$$dM/dt = k_0 + k_1 \cdot d^2I/dt^2 + k_2 \cdot (d^2I/dt^2)^2 + k_3 \cdot (d^2I/dt^2)^3 \qquad \text{(i)},$$

worin $k_0$, $k_1$, $k_2$ und $k_3$ vorgegebene und insbesondere durch vorherige Eichung bestimmte Konstante darstellen und die Bedingungen

$$k_0, k_2, k_3 \geq 0 \text{ und } k_1 > 0$$

gelten.

2. Verfahren nach Anspruch 1, **dadurch gekennzeichnet, daß** durch Integration des in (C) erhaltenen Massenstroms (dM/dt) innerhalb eines vorgegebenen Zeitintervalls die in diesem Zeitintervall umgesetzte Masse (M), gegebenenfalls unter Verwendung einer vorgegebenen und insbesondere durch vorherige Eichung bestimmten Integrationskonstante, ermittelt wird.

3. Verfahren nach Anspruch 1 und/oder 2, **dadurch gekennzeichnet, daß** das Signal I(t) nach (A) und vor (B) gleichgerichtet und/oder zur Abtrennung unerwünschter Frequenzen, insbesondere der Netzfrequenz von 50 oder 60 Hz und/oder unerwünschter Hochfrequenzen, gefiltert wird.

4. Verfahren nach einem oder mehreren der Ansprüche 1 bis 3, **dadurch gekennzeichnet, daß** die in (B) erhaltene 2. Ableitung $d^2I/dt^2$ des Signals I(t) vor (C) in Form zeitdiskreter Signale einer Mittelung unterzogen wird, vorzugsweise einer quadratischen Mittelung nach der Beziehung (ii)

$$V = \sqrt{\frac{1}{T} \int_0^T (d^2I/dt^2)^2 \, dt} \qquad \text{(ii)},$$

worin

V  den gemittelten Signalwert und
T  die Integrationsdauer bedeuten.

5. Verfahren nach einem oder mehreren der Ansprüche 1 bis 4, **dadurch gekennzeichnet, daß** ein virtueller Massenstrom quantitativ erfaßt wird, insbesondere eine Deformation oder Torsion eines metallischen Körpers, wobei das Ausgangssignal von einem Deformations- bzw. Torsionssensor, insbesondere von einer Dehnungsmeßeinrichtung, als dem zu erfassenden Massenstrom zugeordnetes elektrisches Signal (I(t)) in (A) verwendet und in (C) der virtuelle Massenstrom als Deformation bzw. Torsion oder Drehmoment bestimmt wird.

6. Verfahren nach einem oder mehreren der Ansprüche 1 bis 4, **dadurch gekennzeichnet, daß** als korrelierte Größe eine rheologische Eigenschaft eines Fluids, insbesondere die kinematische Viskosität, bestimmt wird, wobei in (A) der elektrische Widerstand oder die Leitfähigkeit des Fluids oder ein durch das Fluid fließender Strom als dem Massenstrom zugeordnetes Signal (I(t)) verwendet und in (C) der virtuelle Massenstrom als rheologische Eigenschaft, insbesondere die kinematische Viskosität, bestimmt wird.

7. Verfahren nach einem oder mehreren der Ansprüche 1 bis 4, **dadurch gekennzeichnet, daß** als Massenstrom der Durchsatz eines Fluids durch eine Leitung oder eine Grenzfläche, insbesondere ein Filter oder eine Membran, bestimmt wird, wobei in (A) der elektrische Widerstand oder die Leitfähigkeit des Fluids oder ein durch das Fluid fließender Strom oder ein Ausgangssignal von einer Laser-Doppler-Meßeinrichtung als dem Massenstrom zugeordnetes Signal (I(t)) verwendet und in (C) der Durchsatz des Fluids als Massenstrom bestimmt wird.

8. Verfahren nach Anspruch 7, **dadurch gekennzeichnet, daß** das Fluid eine Polymerlösung, eine Polymerschmelze, ein Plasma, ein abbindendes hydraulisches System oder eine Metallschmelze ist.

9. Verfahren nach einem oder mehreren der Ansprüche 1 bis 4, **dadurch gekennzeichnet, daß** in (A) ein durch einen elektrischen Halbleiter oder Leiter fließender, mit mittel- und/oder hochfrequenten Signalstörungen behafteter elektrischer Strom als Signal (I(t)) gemessen und in (C) als virtueller Massenstrom eine approximierte elektrische Stromstärke oder elektrische Leistung bestimmt wird.

10. Verfahren nach einem oder mehreren der Ansprüche 1 bis 4, 6 und 7, **dadurch gekennzeichnet, daß** die strömende Masse ein Fluid ist, das unter Wasser, Lösungen anorganischer oder organischer Stoffe in Wasser oder organischen Lösungsmitteln, Suspensionen, Emulsionen, Mikroemulsionen, Flüssigkristallmaterialien, Pasten, Liposomen, Gasen, Dämpfen, Zellsuspensionen und Aerosolen ausgewählt ist.

11. Verfahren nach einem oder mehreren der Ansprüche 1 bis 10, **gekennzeichnet durch**

   - Verwendung des in (C) erhaltenen Massenstrom (dM/dt) der Masse M bzw. der damit korrelierten Größe als Istwert einer Regelgröße
   und

      (D) Regelung des Massenstroms der Masse M bzw. der damit korrelierten Größe **durch** Steuerung eines Stellgliedes über eine entsprechende Stellgröße in Abhängigkeit vom Istwert der Regelgröße oder von der Differenz zwischen dem Istwert der Regelgröße und einem vorgegebenen Sollwert oder von einem vorgegebenen Schwellenwert in einem geschlossenen Regelkreis.

12. Verfahren nach Anspruch 11, **dadurch gekennzeichnet, daß** die Regelung des Massenstroms der Masse M bzw. der damit korrelierten Größe in (D) nur durchgeführt wird, wenn der Istwert der Regelgröße oberhalb oder unterhalb eines vorgegebenen Schwellenwertes liegt.

13. Verfahren nach Anspruch 11, **dadurch gekennzeichnet, daß** die Regelung des Massenstroms der Masse M bzw. der damit korrelierten Größe in (D) bei oberhalb eines Schwellenwertes liegendem Istwert der Regelgröße nach einer ersten Regelcharakteristik und bei unterhalb des vorgegebenen Schwellenwertes liegendem Istwert der Regelgröße nach einer zweiten Regelcharakteristik durchgeführt wird, wobei die erste und die zweite Regelcharakteristik nicht gleich sind.

14. Verfahren nach Anspruch 11 und/oder 12, **dadurch gekennzeichnet, daß** die Regelung in (D) unter Anwendung von einer bzw. zwei Regelcharakteristiken durchgeführt wird, die P-, PI-, PID- oder PDPI-Verhalten ergeben oder frei gewählten Kennlinien entsprechen.

15. Verfahren nach einem oder mehreren der Ansprüche 11 bis 14 in Anwendung zur Regelung von elektrischen Lichtbogenöfen, bei denen mit Hilfe eines Lichtbogens zwischen dem Schmelzgut und einer Elektrode Metall geschmolzen wird,
**gekennzeichnet durch**

- Erfassung des **durch** die Elektrode fließenden Stroms I(t) bzw. eines ihm proportionalen Signals zu vorgegebenen Zeitpunkten oder kontinuierlich während der gesamten Dauer des Schmelzvorgangs in (A) und
- Steuerung des Elektrodenvorschubs in (D).

16. Verfahren nach einem oder mehreren der Ansprüche 11 bis 14 in Anwendung zur Regelung von elektrischen Schweißeinrichtungen und elektrischen Trennschweißeinrichtungen, bei denen mit Hilfe eines Lichtbogens zwischen dem Substrat und einer Elektrode Metall zur Erzeugung einer Schweißnaht geschmolzen bzw. zum Trennen abgeschmolzen wird,
**gekennzeichnet durch**

- Erfassung des **durch** die Elektrode fließenden Stroms I(t) zu vorgegebenen Zeitpunkten oder kontinuierlich während der gesamten Dauer des Schmelzvorgangs in (A) und
- Steuerung des Elektrodenvorschubs in (D).

17. Verfahren nach Anspruch 15 oder 16, **dadurch gekennzeichnet, daß** in (D) der Istwert mit einem vorgegebenen, vorzugsweise durch vorherige Eichung ermittelten Schwellenwert ($(dM/dt)_{lim}$) verglichen wird und der Vorschub der Elektrode nach einer ersten Regelcharakteristik gesteuert oder unterbrochen wird, wenn der Istwert während einer vorgegebenen Zeitdauer oberhalb des Schwellenwerts liegt oder gleich diesem Schwellenwert ist, und
der Vorschub der Elektrode nach einer zweiten Regelcharakteristik, vorzugsweise in Verbindung mit einer Impedanz-Regelung, gesteuert wird, wenn der Istwert während einer vorgegebenen Zeitdauer unterhalb des Schwellenwerts liegt.

18. Verfahren nach Anspruch 17, **dadurch gekennzeichnet, daß**

(a) der Vorschub der Elektrode bei über dem Schwellenwert ($(dM/dt)_{lim}$) liegendem Istwert und gegebenenfalls bei über einem Schwellenwert $I_{lim}$ liegendem Strom I(t) nach einer ersten Regelcharakteristik durchgeführt wird, die P-, PI-, PID- oder PDPI-Verhalten ergibt oder einer frei gewählten und vorzugsweise in Vorversuchen optimierten Kennlinie entspricht,
oder
(b) die Regelung nach der 2. Regelcharakteristik, insbesondere die Impedanz-Regelung, nach einer Regelcharakteristik durchgeführt wird, die P-, PI-, PID- oder PDPI-Verhalten ergibt oder einer frei gewählten und vorzugsweise in Vorversuchen optimierten Kennlinie entspricht.

19. Verfahren nach Anspruch 18, **dadurch gekennzeichnet, daß** im Fall (a) und/oder im Fall (b) eine Kennfeldregelung angewandt wird.

20. Verfahren nach Anspruch 18 oder 19, **dadurch gekennzeichnet, daß** eine oder mehrere der nachstehend aufgeführten Maßnahmen durchgeführt werden:

- der nach der Beziehung (i) erhaltene Istwert wird unter Verwendung einer vorgegebenen und vorzugsweise durch vorherige Eichung bestimmten Integrationskonstante innerhalb eines vorgegebenen Zeitintervalls integriert, wobei die in diesem Zeitintervall geschmolzene Menge an Schmelzgut bzw. die abgeschmolzene Masse (M) erhalten wird;
- der Strom I(t) wird in Form zeitdiskreter Signale einer Mittelung unterzogen, vorzugsweise einer quadratischen Mittelung nach der Beziehung (iii):

$$U = \sqrt{\frac{1}{T} \int_0^T I^2\, dt} \qquad \text{(iii)},$$

worin

U   den gemittelten Signalwert und

T   die Integrationsdauer

bedeutet,

und

der gemittelte Signalwert U wird zur Stellgrößenerzeugung verwendet;

- der Zeitpunkt der Beendigung des Schmelzvorgangs wird aufgrund eines Glattheitskriteriums ermittelt, indem die Amplitude der Fluktuationen des Stroms I(t) oder der 2. Ableitung $d^2I/dt^2$ während einer vorgegebenen Zeitdauer ermittelt und mit einem vorgegebenen Grenzwert verglichen wird und der Endpunkt festgestellt wird, wenn die Amplitude der Fluktuationen unterhalb des Grenzwerts bleibt;
- der Zeitpunkt der Beendigung des Schmelzvorgangs wird ermittelt, indem der Massenstrom (dM/dt) und/oder die sich daraus durch Integration ergebende Masse (M) des geschmolzenen Materials mit einem vorgegebenen Grenzwert verglichen wird und der Endpunkt festgestellt wird, wenn der ermittelte Massenstrom (dM/dt) den betreffenden Grenzwert unterschreitet und/oder die durch Integration erhaltene Masse (M) den betreffenden Grenzwert erreicht;
- die Regelung wird optimiert, indem der Schwellenwert für den Istwert dM/dt und/oder der Schwellenwert $I_{lim}$ für eine gegebene Vorrichtung schrittweise maximiert werden.

**21.** Vorrichtung zur Durchführung des Verfahrens nach den Ansprüchen 1 bis 10, die aufweist:

- eine Sensoreinrichtung (1) zur Erzeugung eines einer Eigenschaft oder Eigenschaften eines Massenstroms (dM/dt) einer Masse M oder einer damit korrelierten Größe zugeordneten elektrischen Signals (I(t)), die gegebenenfalls eine Einrichtung aufweist, mit der ein nichtelektrisches Signal in ein entsprechendes elektrisches Signal I(t) umgewandelt werden kann,
- eine Differenziereinrichtung (4), in der die 2. Ableitung $d^2I/dt^2$ des Signals I(t) gebildet wird,
- eine Einrichtung (6) zur Bestimmung des Massenstroms (dM/dt) aus dem Signal der 2. Ableitung nach der Beziehung (i)

$$dM/dt = k_0 + k_1 \cdot d^2I/dt^2 + k_2 \cdot (d^2I/dt^2)^2 + k_3 \cdot (d^2I/dt^2)^3 \qquad \text{(i)},$$

worin $k_0$, $k_1$, $k_2$ und $k_3$ vorgegebene und insbesondere durch vorherige Eichung bestimmte Konstante darstellen und die Bedingungen

$$k_0, k_2, k_3 \geq 0 \text{ und } k_1 > 0$$

gelten,

sowie

- eine Ausgabeeinrichtung (7), die den ermittelten Wert des Massenstroms dM/dt ausgibt.

**22.** Vorrichtung zur Durchführung des Verfahrens nach den Ansprüchen 11 bis 20, die aufweist:

- eine Sensoreinrichtung (1) zur Erzeugung eines einer Eigenschaft oder Eigenschaften eines Massenstroms (dM/dt) einer Masse M oder einer damit korrelierten Größe zugeordneten elektrischen Signals (I(t)), die gegebenenfalls eine Einrichtung aufweist, mit der ein nichtelektrisches Signal in ein entsprechendes elektrisches Signal I(t) umgewandelt werden kann,
- eine Differenziereinrichtung (4), in der die 2. Ableitung $d^2I/dt^2$ des Signals I(t) gebildet wird,
- eine Einrichtung (6) zur Bestimmung des Massenstroms (dM/dt) aus dem Signal der 2. Ableitung nach der Beziehung (i)

$$dM/dt = k_0 + k_1 \cdot d^2I/dt^2 + k_2 \cdot (d^2I/dt^2)^2 + k_3 \cdot (d^2I/dt^2)^3 \qquad \text{(i)},$$

worin $k_0$, $k_1$, $k_2$ und $k_3$ vorgegebene und insbesondere durch vorherige Eichung bestimmte Konstante dar-

stellen und die Bedingungen

$$k_0, k_2, k_3 \geq 0 \text{ und } k_1 > 0$$

gelten,
als Istwert der Regelgröße,

- eine Steuereinrichtung (13), die nach einer vorgegebenen Charakteristik ein Steuersignal für ein Stellglied erzeugt,
  sowie
- ein Stellglied (14), das den Massenstrom (dM/dt) der Masse M oder einer damit korrelierten Größe beeinflußt.

23. Vorrichtung nach Anspruch 22, **dadurch gekennzeichnet, daß** sie ferner einen der Einrichtung (6) zur Bestimmung des Massenstroms (dM/dt) nachgeschalteten Vergleicher (8) aufweist, der den Istwert des Massenstroms oder einer ihm proportionalen Größe mit einem vorgegebenen und vorzugsweise prozeßoptimierten Schwellenwert ($(dM/dt)_{lim}$) vergleicht und Ausgangssignale abgibt, die für oberhalb und für unterhalb des Schwellenwerts liegende Istwerte unterschiedlich sind,
und die Steuereinrichtung (13) so ausgebildet ist, daß sie für jeden Zustand des Ausgangssignals des Vergleichers (8) eine von mehreren, vorzugsweise zwei, vorgegebenen Regelcharakteristiken auswählt oder für einen bestimmten Zustand des Ausgangssignals des Vergleichers (8) eine Regelcharakteristik auswählt und für den anderen Zustand eine Schalteinrichtung (16, 17) betätigt, die einen unabhängigen Fremdregler (15), insbesondere einen Impedanzregler, einschaltet, bzw. dessen Stellsignal anstelle des von ihr erzeugten Stellsignals dem Stellglied (14) zuleitet.

24. Vorrichtung nach Anspruch 22 oder 23, **dadurch gekennzeichnet, daß** die Steuereinrichtung (13) und/oder der Fremdregler (15) P-, PI-, PID- oder PDPI-Verhalten ergeben oder frei gewählte und vorzugsweise prozeßoptimierte Kennlinien aufweisen oder nach dem Prinzip der Fuzzy-Logik arbeiten.

25. Vorrichtung nach Anspruch 23 oder 24, **dadurch gekennzeichnet, daß** sie ferner aufweist:

- einen Vergleicher (11), der das elektrische Signal (I(t)) als Istwert mit einem vorgegebenen und vorzugsweise prozeßoptimierten Schwellenwert ($I_{lim}$) vergleicht,
  und
- ein logisches Verknüpfungsglied (12), vorzugsweise ein UND-Glied, das die Ausgangssignale der beiden Vergleicher (8, 11) zugeführt erhält und bei Erfülltheit des UND-Kriteriums, wenn sowohl der Istwert des Massenstroms (dM/dt) als auch der Istwert des Stroms (I(t)) über den vorgegebenen Schwellenwerten ($(dM/dt)_{lim}$, $I_{lim}$) liegen, ein Ausgangssignal an die Steuereinrichtung (13) abgibt, aufgrund dessen die Steuereinrichtung (13) eine vorgegebene Regelcharakteristik auswählt oder die Schalteinrichtung (16, 17) betätigt, die den Fremdregler (15) abschaltet bzw. die Weiterleitung eines Stellsignals an das Stellglied (14) unterbricht, und bei Nichterfülltheit des UND-Kriteriums eine andere Regelcharakteristik auswählt oder den Fremdregler (15) wieder zuschaltet.

26. Vorrichtung nach einem oder mehreren der Ansprüche 21 bis 25, **dadurch gekennzeichnet, daß** sie ferner eine Ausgabeeinrichtung (7) aufweist, die vorzugsweise die nach einer vorgegebenen Zeitdauer durchgesetzte oder umgesetzte Masse, den Massenstrom, ein damit korreliertes Signal, einen nach einem vorgegebenen Kriterium ermittelten Endzustand des Massenstroms und/oder andere prozeßrelevante Größen und Parameter ausgibt.

27. Vorrichtung nach Anspruch 26, **dadurch gekennzeichnet, daß** die Ausgabeeinrichtung (7) eine Anzeigeeinrichtung, ein Drucker, ein Plotter, eine Warneinrichtung, die ein optisches und/oder akustisches Signal abgeben kann, insbesondere ein Grenzwertmelder, und/oder eine Datenschnittstelle ist, mit der die Ausgabeeinrichtung (7) mit anderen Datenverarbeitungseinrichtungen verbindbar ist.

28. Vorrichtung nach einem oder mehreren der Ansprüche 21 bis 27, **dadurch gekennzeichnet, daß** die Sensoreinrichtung (1) ist:

- zur Erfassung eines elektrischen Stroms I(t) eine Kombination einer Rogowski-Spule, die ein der 1. Ableitung des Stroms (I(t)) im umfaßten Leiter (L) entsprechendes Signal liefert, mit einer Integrationseinrichtung

oder

- ein am stromführenden Leiter (L) angebrachter induktionsfreier Meßwiderstand (R), wobei der Spannungsabfall (a) am Meßwiderstand (R) dem Strom I(t) entspricht,
- ein optischer Detektor, der die Strahlungsintensität bei einer vorgegebenen Wellenlänge oder in einem Wellenlängenbereich innerhalb des IR-, UVund/oder sichtbaren Spektralbereichs erfaßt und als elektrisches Ausgangssignal abgibt, vorzugsweise ein Pyrometer, oder
- ein akustischer Detektor, der die Schallintensität innerhalb eines vorgegebenen Frequenzbereichs erfaßt und als elektrisches Ausgangssignal abgibt.

29. Vorrichtung nach einem oder mehreren der Ansprüche 21 bis 28, **gekennzeichnet durch** einen Gleichrichter (2), der ein von der Sensoreinrichtung (1) abgegebenes Wechselstromsignal (a) gleichrichtet, und/oder eine Filtereinrichtung (3), die das von der Sensoreinrichtung (1) abgegebene und gegebenenfalls gleichgerichtete Signal (a) mit einer vorgegebenen Durchlaßkennlinie filtert, vorteilhaft unter Eliminierung der Netzfrequenz.

30. Vorrichtung nach einem oder mehreren der Ansprüche 21 bis 29, **gekennzeichnet durch** eine Mittelungseinrichtung (5), die das von der Differenziereinrichtung (4) abgegebene Signal der 2. Ableitung $(d^2I/dt^2)$ mittelt, vorzugsweise **durch** quadratische Mittelung nach der Beziehung (ii)

$$V = \sqrt{\frac{1}{T} \int_0^T (d^2 I/dt^2)^2 \, dt} \qquad (ii),$$

worin

V den gemittelten Signalwert und
T die Integrationsdauer bedeuten,

und/oder
eine Mittelungseinrichtung (10), die das gegebenenfalls gleichgerichtete und gegebenenfalls gefilterte Signal (I(t)) mittelt, vorzugsweise **durch** quadratische Mittelung nach der Beziehung (iii)

$$U = \sqrt{\frac{1}{T} \int_0^T I^2 \, dt} \qquad (iii),$$

worin

U den gemittelten Signalwert und
T die Integrationsdauer

bedeutet.

31. Vorrichtung nach einem oder mehreren der Ansprüche 21 bis 30, **dadurch gekennzeichnet, daß** sie ein Mikroprozessorsystem beinhaltet, das eine zentrale Recheneinheit CPU, einen Festwertspeicher ROM, einen Schreib-Lese-Speicher RAM, eine Schnittstelle I/O und ein Bussystem sowie gegebenenfalls ein Keyboard aufweist, wobei die CPU die Signalverarbeitungen der Differentiation, der Mittelwertbildung, der Ermittlung des Massenstroms bzw. ihm entsprechender Größen, der Vergleichsbildung, der Steuerung des Stellgliedes nach vorgegebenen oder adaptiv gelernten Regelcharakteristiken, der Signalfilterung, der Steuerung der Schnittstelle und/oder der Ansteuerung bzw. Interaktion mit einem Keyboard insbesondere aufgrund von im ROM abgelegten Programmen unter Verwendung des RAM über das Bussystem steuert.

32. Vorrichtung nach Anspruch 31, **dadurch gekennzeichnet, daß** die Daten der vorgegebenen oder adaptiv prozeßbezogen gelernten Regelcharakteristiken in einem oder mehreren Kennfeldern abgelegt sind.

**Claims**

1. Method for the quantitative determination of mass flows and/or quantities correlated therewith, comprising the following measures:

    (A) detection of an electrical signal (I(t)) or of a non-electrical signal which is converted into an electrical signal (I(t)), the signals being allocated to a property or to properties of the mass flow (dM/dt) of a mass M or a quantity correlated therewith at one or more predetermined times or during the total duration of the mass flow process, optionally with consideration of the Shannon theorem,
    (B) generation of the second order derivative $d^2I/dt^2$ of the signal I(t)
    and
    (C) determination of the mass flow (dM/dt) of the mass M or a quantity correlated therewith, respectively, according to the relation (i):

    $$dM/dt = k_0 + k_1 \cdot d^2I/dt^2 + k_2 \cdot (d^2I/dt^2)^2 + k_3 \cdot (d^2I/dt^2)^3 \qquad (i),$$

    wherein $k_0$, $k_1$, $k_2$ and $k_3$ are predetermined constants, particularly determined by previous calibration, the conditions

    $$k_0, k_2, k_3 \geq 0 \text{ and } k_1 > 0$$

    applying.

2. Method according to claim 1, **characterized in that** the mass (M) converted within a predetermined time interval is determined by integration of the mass flow (dM/dt) obtained in (C) within that time interval, optionally with use of a predetermined integration constant which has particularly been determined by previous calibration.

3. Method according to claim 1 and/or 2, **characterized in that** the signal I(t) is rectified and/or filtered for removing undesired frequencies, particularly the power supply frequency of 50 or 60 Hz and/or undesired high frequencies, after (A) or before (B).

4. Method according to one or more of claims 1 to 3, **characterized in that** the second order derivative $d^2I/dt^2$ of the signal I(t) obtained in (B) is subjected to averaging before (C) in the form of time-discrete signals, preferably a root mean square averaging according to the relation (ii)

    $$V = \sqrt{\frac{1}{T} \int_o^T (d^2I/dt^2)^2 dt} \qquad (ii),$$

    wherein

    V    is the averaged signal value, and
    T    is the integration time.

5. Method according to one or more of claims 1 to 4, **characterized in that** a virtual mass flow is quantitatively determined, particularly a deformation or torsion of a metallic body, wherein the output signal from a deformation or torsion sensor, particularly from a strain gauge, is used as electrical signal (I(t)) allocated to the mass flow to be determined in (A), and the virtual mass flow is determined in (C) as deformation or torsion, respectively, or as torque.

6. Method according to one or more of claims 1 to 4, **characterized in that** a rheological property of a fluid, particularly the kinematic viscosity, is determined as correlated quantity, wherein in (A) the electrical resistance or the conductivity of the fluid or a current flowing through that fluid is used as signal ($I(t)$) allocated to the mass flow, and the virtual mass flow is determined in (C) as rheological property, particularly the kinematic viscosity.

7. Method according to one or more of claims 1 to 4, **characterized in that** the throughput of a fluid through a duct or an interface, particularly a filter or a membrane, is determined as mass flow, wherein in (A) the electrical resistance or the conductivity of the fluid or a current flowing through the fluid or an output signal from a laser Doppler measuring device is used as signal ($I(t)$) allocated to the mass flow, and in (C) the throughput of the fluid is determined as mass flow.

8. Method according to claim 7, **characterized in that** the fluid is a polymer solution, a polymer melt, a plasma, a setting hydraulic system or a metal melt.

9. Method according to one or more of claims 1 to 4, **characterized in that** in (A) an electric current flowing through an electrical semiconductor or conductor and comprising medium-frequency and/or high-frequency signal interferences is measured as signal ($I(t)$), and in (C), an approximate electrical current intensity or electrical power is determined as virtual mass flow.

10. Method according to one or more of claims 1 to 4, 6 and 7, **characterized in that** the flowing mass is a fluid selected from water, solutions of inorganic or organic materials in water or organic solvents, suspensions, emulsions, microemulsions, liquid crystal materials, pastes, liposomes, gases, vapours, cell suspensions and aerosols.

11. Method according to one or more of claims 1 to 10, **characterized by**

   - use of the mass flow ($dM/dt$) of the mass M or of the quantity correlated therewith, respectively, obtained in (C) as actual value of a controlled magnitude
     and

     (D) controlling the mass flow of the mass M or of the quantity correlated therewith, respectively, by controlling an actuator through a corresponding control variable in dependency of the actual value of the controlled magnitude or the difference between the actual value of the controlled magnitude and a predetermined value or of a predetermined threshold value in a closed-loop control circuit.

12. Method according to claim 11, **characterized in that** the control of the mass flow of the mass M or the quantity correlated therewith, respectively, in (D) is carried out only if the actual value of the controlled magnitude is above or below a predetermined threshold value.

13. Method according to claim 11, **characterized in that** the control of the mass flow of the mass M or the quantity correlated therewith, respectively, in (D) is effected according to a first control characteristic if the actual value of the controlled magnitude is above a threshold value, and according to a second control characteristic if the actual value of the controlled magnitude is below the predetermined threshold value, the first and second control characteristics not being the same.

14. Method according to claim 11 and/or 12, **characterized in that** the control is effected in (D) with application of one or two control characteristics, respectively, leading to P, PI, PID or PDPI control behaviour or corresponding to freely selected characteristics.

15. Method according to one or more of claims 11 to 14 with application to the control of electric arc furnaces where metal is molten using an arc between the material to be molten and an electrode, **characterized by**

   - detection of the current $I(t)$ or a signal proportional thereto, respectively, at predetermined times or continuously during the total duration of the melting process in (A)
     and
   - control of the electrode feed in (D).

16. Method according to one or more of claims 11 to 14 with application to the control of electric welding devices and electric cutting devices, where metal is molten for producing a weld seam or is molten off, respectively, for cutting, using an arc between the substrate and an electrode,

**characterized by**

- detection of the current I(t) flowing through the electrode at predetermined times or continuously during the total duration of the melting process in (A)
  and
- control of the electrode feed in (D).

**17.** Method according to claim 15 or 16, **characterized in that** in (D) the actual value is compared with a threshold value ($(dM/dt)_{lim}$) preferably being determined by previous calibration, and the electrode feed is controlled according to a first control characteristic or interrupted if the actual value is above the threshold value or is equal to that threshold value during a predetermined time,
and
the electrode feed is controlled according to a second control characteristic, preferably in combination with an impedance control, if the actual value is below the threshold value during a predetermined time.

**18.** Method according to claim 17, **characterized in that**

(a) the electrode feed is effected according to a first control characteristic leading to P, PI, PID or PDPI control behaviour or corresponding to a freely selected characteristic, preferably a characteristic optimized in previous experiments, if the actual value is above the threshold value ($(dM/dt)_{lim}$) and optionally if the current I(t) is above a threshold value $I_{lim}$, or
(b) the control is effected according to the second control characteristic leading to P, PI, PID or PDPI control behaviour or corresponding to a freely selected characteristic, preferably a characteristic optimized in previous experiments.

**19.** Method according to claim 18, **characterized in that** in case (a) and/or in case (b) a map control is used.

**20.** Method according to claim 18 or 19, **characterized in that** one or more of the measures specified below are carried out:

- The actual value obtained according to the relation (i) is integrated within a predetermined time interval using a predetermined integration constant preferably determined by previous calibration, whereby the molten amount of the material to be molten or the mass (M) molten off is obtained;
- the current I(t) is subjected to averaging in the form of time-discrete signals, preferably a root mean square averaging according to the relation (iii):

$$U = \sqrt{\frac{1}{T} \int_0^T I^2 dt} \qquad \text{(iii)},$$

wherein

U    is the averaged signal value, and
T    is the integration time,

and
the averaged signal value U is used for generating the control variable;

- the time of termination of the melting process is determined by means of a smoothness criterion by determining the amplitudes of the fluctuations of the current I(t) or the second order derivative $d^2I/dt^2$ during a predetermined time and comparing them with a predetermined limit value, and detecting the end point if the amplitudes of the fluctuations remain below the limit value;
- the time of termination of the melting process is determined by comparing the mass flow (dM/dt) and/or the mass (M) of the molten material obtained therefrom by integration with a predetermined limit value, and detecting the end point if the determined mass flow (dM/dt) falls below the respective limit value and/or the mass (M) obtained by integration reaches the respective limit value;
- the control is optimized by stepwise maximizing the threshold value for the actual value dM/dt and/or the threshold value $I_{lim}$ for a given device.

**21.** Apparatus for carrying out the method according to claims 1 to 10, comprising:

- Sensor means (1) for generating an electrical signal (I(t)) allocated to a property or to properties of a mass flow (dM/dt) of a mass M or a quantity correlated therewith, optionally comprising means for converting a non-electrical signal into a corresponding electrical signal I(t),
- differentiation means (4) wherein the second order derivative $d^2I/dt^2$ of the signal I(t) is generated,
- mass flow determination means (6) for determining the mass flow (dM/dt) from the signal of the second order derivative according to the relation (i)

$$dM/dt = k_0 + k_1 \cdot d^2I/dt^2 + k_2 \cdot (d^2I/dt^2)^2 + k_3 \cdot (d^2I/dt^2)^3 \qquad (i),$$

wherein $k_0$, $k_1$, $k_2$ and $k_3$ are predetermined constants, particularly determined by previous calibration, the conditions

$$k_0, k_2, k_3 \geq 0 \text{ and } k_1 > 0$$

applying,
and
- output means (7) outputting the determined value of the mass flow dM/dt.

**22.** Apparatus for carrying out the method according to claims 11 to 20, comprising:

- Sensor means (1) for generating an electrical signal (I(t)) allocated to a property or to properties of a mass flow (dM/dt) of a mass M or a quantity correlated therewith, optionally comprising means for converting a non-electrical signal into a corresponding electrical signal I(t),
- differentiation means (4) wherein the second order derivative $d^2I/dt^2$ of the signal I(t) is formed,
- mass flow determination means (6) for determining the mass flow (dM/dt) from the signal of the second order derivative according to the relation (i)

$$dM/dt = k_0 + k_1 \cdot d^2I/dt^2 + k_2 \cdot (d^2I/dt^2)^2 + k_3 \cdot (d^2I/dt^2)^3 \qquad (i),$$

wherein $k_0$, $k_1$, $k_2$ and $k_3$ are predetermined constants, particularly determined by previous calibration, the conditions
$k_0, k_2, k_3 \geq 0 \text{ and } k_1 > 0$
applying,
as actual value of the control quantity,
- control means (13) generating a control signal for an actuator according to a predetermined characteristic, and
- an actuator (14) influencing the mass flow (dM/dt) of the mass M or a quantity correlated therewith.

**23.** Apparatus according to claim 22, **characterized in that** it further comprises a comparator (8) post-connected to the mass flow determination means (6) for determining the mass flow (dM/dt), comparing the actual value of the mass flow or of a quantity proportional thereto with a predetermined threshold value ($(dM/dt)_{lim}$) which has preferably been optimized in a process-oriented manner, and producing output signals which are different for actual values above and below the threshold value, and the control means (13) are designed such that they select for each state of the output signal of the comparator (8) one of a plurality of predetermined control characteristics, preferably of two control characteristics, or, for one particular state of the output signal of the comparator (8), select a control characteristic, and for the other state operate switching means (16, 17) which switch on an independent external controller (15), particularly an impedance controller, or supply the control signal thereof, instead of the control signal generated by the control means, to the actuator (14), respectively.

**24.** Apparatus according to claim 22 or 23, **characterized in that** the control means (13) and/or the external controller (15) provide P, PI, PID or PDPI behaviour or comprise freely selected characteristics, preferably optimized in a process-oriented manner, or are functioning according to the principle of Fuzzy logics.

**25.** Apparatus according to claim 23 or 24, **characterized in that** it further comprises:

- A comparator (11) comparing the electrical signal (I(t)) as actual value with a predetermined threshold value ($I_{lim}$) which has preferably been optimized in a process-oriented manner, and
- a logical gate (12), preferably an AND gate, receiving the output signals of the two comparators (8, 11) and supplying an output signal to the control means (13) if the AND condition is met, where both the actual value of the mass flow (dM/dt) and the actual value of the current (I(t)) are above the predetermined threshold values ($(dM/dt)_{lim}$, $I_{lim}$), in response to which the control means (13) select a predetermined control characteristic or operate the switching means (16, 17) which switch off the external controller (15) or interrupt the supply of a control signal to the actuator (14), and the control means (13) select another control characteristic or connect the external controller (15) again if the AND condition is not met.

**26.** Apparatus according to one or more of claims 21 to 25, **characterized in that** it further comprises output means (7) which preferably output the mass put through or converted after a predetermined time period, the mass flow, a signal correlated therewith, an end state of the mass flow determined in accordance with a predetermined criterion and/or other quantities and parameters relevant to the process.

**27.** Apparatus according to claim 26, **characterized in that** the output means (7) are a display device, a printer, a plotter, a warning device being capable of outputting an optical and/or acoustic signal, particularly a limit indicator, and/or a data interface through which the output means (7) may be connected to other data processing means.

**28.** Apparatus according to one or more of claims 21 to 27, **characterized in that** the sensor means (1) are:

- a combination of a Rogowski coil supplying a signal corresponding to the first order derivative of the current (I(t)) flowing in the surrounded conductor (L), with integration means, for detecting an electric current I(t) or
- a non-reactive measuring resistor (R) attached to the current-carrying conductor (L), the voltage drop (a) at the measuring resistor (R) corresponding to the current I(t),
- an optical detector detecting the radiation intensity at the predetermined wavelength or within a wavelength range in the IR, UV and/or visible spectral region and supplying it as an electrical output signal, preferably a pyrometer, or
- an acoustic detector detecting the sound intensity within a predetermined frequency range and supplying it as electrical output signal.

**29.** Apparatus according to one or more of claims 21 to 28, **characterized by** a rectifier (2) rectifying the ac current signal supplied by the sensor means (1) and/or filter means (3) filtering the signal (a) supplied by the sensor means (1) and optionally being rectified with application of a predetermined transmission characteristic, preferably with elimination of the ac line frequency.

**30.** Apparatus according to one or more of claims 21 to 29, **characterized by**
averaging means (5) averaging the signal of the second order derivative ($d^2I/dt^2$) supplied by the differentiation means (4), preferably by root mean square averaging according to the relation (ii)

$$V = \sqrt{\frac{1}{T} \int_0^T (d^2I/dt^2)^2 dt} \qquad (ii),$$

wherein

V   is the averaged signal value, and
T   is the integration time,

and/or
averaging means (10) averaging the signal (I(t)) optionally being rectified and optionally being filtered, preferably by root mean square averaging according to the relation (iii)

$$U = \sqrt{\frac{1}{T} \int_{o}^{T} I^2 dt} \qquad \text{(iii)},$$

wherein

U    is the averaged signal value, and
T    is the integration time.

**31.** Apparatus according to one or more of claims 21 to 30, **characterized in that** it comprises a microprocessor system comprising a central processing unit CPU, a read-only memory ROM, a read-write memory RAM, an interface I/O and a bus system and optionally a keyboard,
the CPU controlling the signal processing operations of differentiation, averaging, determination of the mass flow or quantities corresponding thereto, comparing operations, controlling the actuator in accordance with predetermined or adaptively learned control characteristics, signal filtering, controlling the interface and/or controlling or interacting with a keyboard, particularly on the basis of programs stored in the ROM using the RAM, via the bus system.

**32.** Apparatus according to claim 31, **characterized in that** the data of the control characteristics which have been predetermined or adaptively learned in a process-related manner are stored in one or more maps.

**Revendications**

**1.** Méthode pour la détection quantitative de débits massiques et/ou de grandeurs y corrélées, comprenant les mesures suivantes:

(A) détection d'un signal électrique (I(t)) ou d'un signal non électrique, qui est converti en un signal électrique (I(t)), associé à une propriété ou à des propriétés du débit massique (dM/dt) d'une masse M à détecter ou d'une grandeur y corrélée à un moment ou plusieurs moments fixés à l'avance ou pendant toute la durée du processus de l'écoulement massique,
éventuellement en respectant le théorème de Shannon pour choisir les moments de la détection,
(B) établissement de la dérivée seconde $d^2I/dt^2$ du signal I(t)
et
(C) détermination du débit massique (dM/dt) de la masse M ou d'une grandeur y corrélée d'après la relation (i) :

$$dM/dt = k_0 + k_i . d^2I/dt^2 + k_2 . (d^2I/dt^2)^2 + k_3 . (d^2I/dt^2)^3 \qquad \text{(i)},$$

où $k_0$, $k_1$, $k_2$ et $k_3$ sont des constantes données et en particulier, déterminées par un étalonnage préalable et les conditions

$$k_0, k_2, k_3 \geq 0 \text{ et } k_1 > 0$$

sont valables.

**2.** Méthode selon la revendication 1, **caractérisée en ce que** l'on détermine, par intégration du débit massique (dM/dt) obtenu en (C) en un intervalle de temps fixé à l'avance, la masse (M) transformée dans cet intervalle de temps, éventuellement en utilisant une constante d'intégration donnée et en particulier prédéterminée par un étalonnage préalable.

3. Méthode selon la revendication 1 et /ou 2, **caractérisée en ce que** le signal I(t) est redressé après (A) et avant (B) et/ou filtré pour séparer les fréquences indésirables, en particulier la fréquence du secteur de 50 ou 60 Hz et/ ou les hautes fréquences indésirables.

4. Méthode selon l'une ou plusieurs des revendications 1 à 3, **caractérisée en ce que** l'on effectue une moyenne de la dérivée seconde $d^2I/dt^2$, obtenue en (B), du signal I(t) avant (C) sous forme de signaux discrets en temps, de préférence une moyenne quadratique selon la relation (ii)

$$V = \sqrt{\frac{1}{T} \int_0^T (d^2I/dt^2)^2 dt} \qquad \text{(ii)},$$

où

V    est la valeur moyenne du signal et
T    est la durée d'intégration.

5. Méthode selon l'une ou plusieurs des revendications 1 à 4, **caractérisée en ce que** l'on détecte quantitativement un débit massique virtuel, en particulier une déformation ou torsion d'un corps métallique, le signal de sortie d'un capteur de déformation ou de torsion, en particulier d'un appareil de mesure d'allongement, étant utilisé en (A) comme signal électrique (I(t)) associé au débit massique à détecter, et le débit massique virtuel étant déterminé en (C) en tant que déformation ou torsion ou moment de couple.

6. Méthode selon l'une ou plusieurs des revendications 1 à 4, **caractérisée en ce que** l'on détermine en tant que grandeur y corrélée une propriété rhéologique d'un fluide, en particulier la viscosité cinématique, en utilisant en (A) la résistance électrique ou la conductivité du fluide ou un courant circulant dans le fluide comme signal (I(t)) associé au débit massique et en déterminant en (C) le débit massique virtuel en tant que propriété rhéologique, en particulier la viscosité cinématique.

7. Méthode selon l'une ou plusieurs des revendications 1 à 4, **caractérisée en ce que** l'on détermine en tant que débit massique le débit d'un fluide à travers une conduite ou une interface, en particulier un filtre ou une membrane, en utilisant en (A) la résistance électrique ou la conductivité du fluide ou un courant circulant dans le fluide ou un signal de sortie d'un appareil de mesure Doppler au laser comme signal (I(t)) associé au débit massique et en déterminant en (C) le débit du fluide en tant que débit massique.

8. Méthode selon la revendication 7, **caractérisée en ce que** le fluide est une solution d'un polymère, une masse fondue de polymères, un plasma, un système hydraulique faisant la prise ou une matière en fusion métallique.

9. Méthode selon l'une ou plusieurs des revendications 1 à 4, **caractérisée en ce que** l'on mesure en (A) un courant électrique en tant que signal (I(t)) circulant à travers un semi-conducteur ou un conducteur électrique, entaché de perturbations de signaux à moyenne et / ou haute fréquence et l'on détermine en (C) en tant que débit massique virtuel une intensité du courant ou une puissance électrique approximative.

10. Méthode selon l'une ou plusieurs des revendications 1 à 4, 6 et 7, **caractérisée en ce que** la masse s'écoulant est un fluide, qui est choisi parmi l'eau, les solutions de substances inorganiques ou organiques dans l'eau ou les solvants organiques, les suspensions, les émulsions, les micro-émulsions, les matériaux de cristaux liquides, les pâtes, les liposomes, les gaz, les vapeurs, les suspensions cellulaires et les aérosols.

11. Méthode selon l'une ou plusieurs des revendications 1 à 10, **caractérisée par**

 -    l'utilisation du débit massique (dM/dt) de la masse M ou de la grandeur y corrélée, obtenu en (C), comme valeur effective d'une grandeur réglée

(D) le réglage du débit massique de la masse M ou de la grandeur y corrélée en commandant un actionneur par le biais d'une grandeur de commande correspondante, en dépendance de la valeur effective de la grandeur réglée ou de la différence entre la valeur effective de la grandeur de réglage et une valeur de consigne prédéterminée ou d'un seuil prédéterminé dans une boucle d'asservissement fermée.

12. Méthode selon la revendication 11, **caractérisée en ce que** le réglage du débit massique de la masse M ou de la grandeur y corrélée n'est réalisée en (D) que si la valeur effective de la grandeur réglée est supérieure ou inférieure à une valeur seuil prédéterminée.

13. Méthode selon la revendication 11, **caractérisée en ce que** le réglage du débit massique de la masse M ou de la grandeur y corrélée s'effectue en (D) pour une valeur effective de la grandeur réglée supérieure à une valeur seuil selon une première caractéristique de réglage et pour une valeur effective de la grandeur réglée inférieure à une valeur seuil prédéterminée selon une deuxième caractéristique de réglage, les première et deuxième caractéristiques de réglage n'étant pas identiques.

14. Méthode selon la revendication 11 et / ou 12, **caractérisée en ce que** le réglage s'effectue en (D) en utilisant une ou les deux caractéristiques de réglage qui donnent les comportements P, PI, PID ou PDPI ou correspondent à des caractéristiques librement choisies.

15. Méthodes selon l'une ou plusieurs des revendications 11 à 14 utilisées pour régler des fours électriques à arc, dans lesquelles on fait fondre du métal à l'aide d'un arc électrique entre le produit fondu et une électrode, **caractérisées par**

  - la détection du courant I(t) circulant dans l'électrode ou d'un signal qui lui est proportionnel à des moments donnés ou continuellement pendant toute la durée du processus de fusion en (A)
    et
  - la commande de l'alimentation de l'électrode en (D).

16. Méthodes selon l'une ou plusieurs des revendications 11 à 14 utilisées pour régler les installations électriques de soudure et les installations électriques de débrasage, dans lesquelles on fond du métal à l'aide d'un arc électrique entre le substrat et une électrode pour produire une soudure ou pour débraser, **caractérisées par**

  - la détection du courant I(t) circulant dans l'électrode à des moments prédéterminés ou continuellement pendant toute la durée du processus de fusion en (A)
    et
  - la commande de l'alimentation de l'électrode en (D).

17. Méthode selon la revendication 15 ou 16, **caractérisée en ce que** la valeur effective est comparée en (D) à une valeur seuil $((dM/dt)_{lim})$ fixé à l'avance, déterminée de préférence par un étalonnage préalable et l'alimentation de l'électrode est commandée ou interrompue selon une première caractéristique de réglage, si la valeur effective est supérieure à la valeur seuil
ou est égale à cette valeur seuil pendant une durée prédéterminée,
et
l'alimentation de l'électrode est commandée selon une deuxième caractéristique de réglage, de préférence en connexion avec un réglage de l'impédance, si la valeur effective est inférieure à la valeur seuil pendant une durée prédéterminée.

18. Méthode selon la revendication 17, **caractérisée en ce que**

    (a) l'avancement de l'électrode s'effectue pour une valeur effective supérieure à la valeur seuil $((dM/dt)_{lim})$ et éventuellement pour un courant I(t) supérieur à une valeur seuil $I_{lim}$ selon une première caractéristique de réglage, qui donne un comportement du type P, PI, PID ou PDPI ou qui correspond à une caractéristique librement choisie et de préférence optimisée dans des essais préalables, ou
    (b) le réglage selon la deuxième caractéristique, en particulier le réglage de l'impédance, s'effectue selon une caractéristique de réglage qui donne un comportement du type P, PI, PID ou PDPI

    ou qui correspond à une caractéristique librement choisie et de préférence optimisée dans des essais préalables.

**19.** Méthode selon la revendication 18, **caractérisée en ce que** dans le cas (a) et / ou dans le cas (b), on utilise un réglage à tables de correspondance.

**20.** Méthode selon la revendication 18 ou 19, **caractérisée en ce qu'**une ou plusieurs des mesures énumérées ci-après sont réalisées :

- on procède à l'intégration de la valeur effective obtenue selon la relation (i) en utilisant une constante d'intégration fixée à l'avance et de préférence déterminée par un étalonnage préalable en un intervalle de temps prédéterminé, obtenant ainsi la quantité fondue de produit dans cet intervalle de temps ou la masse fondue (M) ;
- on calcule une moyenne du courant I(t) sous la forme de signaux discrets, de préférence une moyenne quadratique selon la relation (iii)

$$U = \sqrt{\frac{1}{T} \int_o^T I^2 dt} \qquad (iii),$$

où

U   est la valeur moyenne du signal et
T   est la durée d'intégration,

et
la valeur moyenne du signal U est utilisée pour établir la variable de réglage ;

- on détermine le moment de la terminaison du processus de fusion sur la base d'un critère de lissage, en déterminant l'amplitude des variations du courant I(t) ou de la dérivée seconde $d^2I/dt^2$ pendant une durée prédéterminée et en la comparant avec une valeur limite prédéterminée et en constatant le point final, si l'amplitude des variations est inférieure à la valeur limite ;
- on détermine le moment de la terminaison du processus de fusion en comparant le débit massique (dM/dt) et / ou la masse (M) de la matière fondue résultant de l'intégration avec une valeur limite prédéterminée et on détermine le point final, si le débit massique déterminé (dM/dt) est inférieur à la valeur limite correspondante et / ou la masse (M) obtenue par intégration atteint la valeur limite correspondante ;
- on optimise le réglage en augmentant progressivement la valeur seuil pour la valeur effective dM/dt et / ou la valeur seuil $I_{lim}$ pour un dispositif donné.

**21.** Dispositif pour la mise en oeuvre de la méthode selon les revendications 1 à 10, qui comprend :

- un dispositif détecteur (1) qui produit un signal électrique (I(t)) associé à une propriété ou à des propriétés du débit massique (dM/dt) d'une masse M ou d'une grandeur y corrélée, comprenant éventuellement un système permettant de transformer un signal non électrique en un signal électrique correspondant I(t),
- un dispositif de différenciation (4) dans lequel la dérivée seconde $d^2I/dt^2$ du signal I(t) est formé,
- un système (6) permettant de déterminer le débit massique (dM/dt) à partir d'un signal de la dérivée seconde d'après la relation (i) :

$$dM/dt = k_0 + k_1.d^2I/dt^2 + k_2.(d^2I/dt^2)^2 + k_3.(d^2I/dt^2)^3 \qquad (i),$$

où ko, $k_1$, $k_2$ et $k_3$ sont des constantes prédéterminées et en particulier, déterminées par un étalonnage préalable et les conditions

$$k_0, k_2, k_3 \geq 0 \text{ et } k_1 > 0$$

sont valables,
ainsi qu'un

- appareil de sortie (7) qui émet la valeur déterminée du débit massique dM/dt.

**22.** Dispositif pour la mise en oeuvre de la méthode selon les revendications 11 à 20, qui comprend :

- un dispositif détecteur (1) qui produit un signal électrique (I(t)) associé à une propriété ou à des propriétés du débit massique (dM/dt) d'une masse M ou d'une grandeur y corrélée, comprenant éventuellement un système permettant de transformer un signal non électrique en un signal électrique correspondant I(t),
- un dispositif de différenciation (4) dans lequel la dérivée seconde $d^2I/dt^2$ du signal I(t) est formée,
- un système (6) permettant de déterminer le débit massique (dM/dt) à partir d'un signal de la dérivée seconde d'après la relation (i) :

$$dM/dt = k_0+k_1.d^2I/dt^2+k_2.(d^2I/dt^2)^2+k_3.(d^2I/dt^2)^3 \qquad (i),$$

où $k_0$, $k_1$, $k_2$ et $k_3$ sont des constantes prédéterminées et en particulier, déterminées par un étalonnage préalable et les conditions

$$k_0, k_2, k_3 \geq 0 \text{ et } k_1 > 0$$

sont valables,
en tant que valeur effective de la grandeur réglée,

- un système de commande (13) qui produit un signal de commande selon une caractéristique prédéterminée pour un actionneur,
ainsi qu'un
- actionneur (14) qui agit sur le débit massique (dM/dt) de la masse M ou d'une grandeur y corrélée.

**23.** Dispositif selon la revendication 22, **caractérisé en ce qu'**il présente en outre un comparateur (8), prévu après le système (6) permettant de déterminer le débit massique (dM/dt), qui compare la valeur effective du débit massique ou une grandeur qui lui est proportionnelle à une valeur seuil ((dM/dt)$_{lim}$) fixée à l'avance et de préférence optimisée sur le plan du processus et émet des signaux de sortie qui sont différents en fonction des valeurs effectives supérieures et inférieures à la valeur seuil, et **en ce que** le système de commande (13) est conçu de telle manière qu'il choisit pour chaque état du signal de sortie du comparateur (8) une des caractéristiques de réglage fixées à l'avance parmi plusieurs, de préférence deux, ou choisit pour un état déterminé du signal de sortie du comparateur (8) une caractéristique de réglage et actionne pour l'autre état un commutateur (16, 17), qui met en marche un régulateur externe (15) indépendant, notamment un régulateur d'impédance, et dont il amène le signal de réglage à l'actionneur (14) à la place du signal de réglage qu'il émet.

**24.** Dispositif selon la revendication 22 ou 23, **caractérisé en ce que** le système de commande (13) et / ou le régulateur externe (15) donnent un comportement du type P, PI, PID ou PDPI ou comprennent des caractéristiques librement choisies et de préférence optimisées au niveau du processus ou travaillent selon le principe de la logique floue.

**25.** Dispositif selon la revendication 23 ou 24, **caractérisé en ce qu'**il comprend en outre :

- un comparateur (11) qui compare le signal électrique (I(t)) en tant que valeur effective à une valeur seuil (I$_{lim}$) prédéterminée et de préférence optimisée au niveau du processus,
et
- un élément logique (12), de préférence un opérateur ET, qui reçoit les signaux de sortie des deux comparateurs (8, 11) et qui, si le critère ET est rempli, même si la valeur effective du débit massique (dM/dt) et la valeur effective du courant (I(t)) sont supérieures à des valeurs seuil prédéterminées ((dM/dt)$_{lim}$, I$_{lim}$), émet un signal de sortie en direction du système de commande (13), sur la base duquel le système de commande (13) choisit une caractéristique de réglage fixée à l'avance ou actionne le commutateur (16, 17) qui coupe le régulateur externe (15) ou interrompt la transmission d'un signal de commande en direction de l'actionneur (14) et qui, si le critère ET n'est pas rempli, choisit une autre caractéristique de réglage ou met en marche à nouveau le régulateur externe (15).

26. Dispositif selon l'une ou plusieurs des revendications 21 à 25, **caractérisé en ce qu'**il comprend en outre un appareil de sortie (7) qui émet de préférence la masse passée ou transformée après une durée donnée, le débit massique, un signal y corrélé, un état final du débit massique, déterminé selon un critère fixé à l'avance, et / ou d'autres grandeurs et paramètres significatifs au niveau du processus.

27. Dispositif selon la revendication 26, **caractérisé en ce que** l'appareil de sortie (7) est un afficheur, une imprimante, une table traçante, une alarme, qui peut émettre un signal optique ou acoustique, notamment un émetteur de signaux d'alerte en cas d'atteinte des valeurs limites, et/ou une interface, grâce à laquelle l'appareil de sortie (7) peut être relié à d'autres systèmes informatiques.

28. Dispositif selon l'une ou plusieurs des revendications 21 à 27, **caractérisé en ce que** le dispositif détecteur (1) est :

   - une combinaison d'une bobine Rogowski, qui fournit un signal correspondant à la dérivée première du courant (I(t)) dans le conducteur entouré (L), avec un appareil d'intégration pour détecter un courant électrique I(t), ou
   - une résistance de mesure (R) sans induction disposée sur le conducteur (L) amenant le courant, la chute de tension (a) sur la résistance de mesure (R) correspondant au courant I(t),
   - un détecteur optique, de préférence un pyromètre, qui détecte l'intensité du rayonnement pour une longueur d'onde donnée ou dans une zone de longueurs d'ondes située dans le domaine spectral IR, UV et/ou visibles et l'émet sous forme d'un signal électrique de sortie, ou
   - un détecteur acoustique, qui détecte l'intensité acoustique dans une gamme de fréquences données et l'émet sous forme d'un signal électrique de sortie.

29. Dispositif selon l'une ou plusieurs des revendications 21 à 28, **caractérisé par** un redresseur (2) qui redresse un signal de courant alternatif (a) émis par le dispositif détecteur (1) et/ou un système de filtrage (3) qui filtre le signal (a) émis par le dispositif détecteur (1) et éventuellement redressé, avec une caractéristique de passage fixée à l'avance, en éliminant avantageusement la fréquence du secteur.

30. Dispositif selon l'une ou plusieurs des revendications 21 à 29, **caractérisé par**

   - un système de calcul de moyenne (5), qui fait la moyenne du signal de la dérivée seconde ($d^2I/dt^2$), émis par le dispositif de différenciation (4), de préférence la moyenne quadratique selon la relation (ii)

$$V = \sqrt{\frac{1}{T} \int_0^T (d^2I/dt^2)^2 dt} \qquad \text{(ii)},$$

où

V    est la valeur moyenne du signal et
T    est la durée de l'intégration.

et / ou

   - un système de calcul de moyenne (10), qui fait la moyenne du signal (I(t)) éventuellement redressé et éventuellement filtré, de préférence la moyenne quadratique selon la relation (iii)

$$U = \sqrt{\frac{1}{T} \int_0^T I^2 dt} \qquad \text{(iii)},$$

**35**

où

U    est la valeur moyenne du signal et

T    est la durée d'intégration,

**31.** Dispositif selon l'une des revendications 21 à 30, **caractérisé en ce qu'**il contient un système de microprocesseur qui comprend une unité centrale CPU, une mémoire morte ROM, une mémoire vive RAM, une interface I/O et un système bus ainsi qu'éventuellement un clavier, la CPU commandant les traitements des signaux de différenciation, de calcul de moyenne, de détermination du débit massique ou des grandeurs lui correspondant, de comparaison, de commande de l'actionneur selon les caractéristiques de réglage prédéterminées ou apprises de manière adaptative, de filtration des signaux, de commande de l'interface et/ou de commande ou d'interaction avec un clavier en particulier sur la base de programmes chargés dans la ROM en utilisant la RAM par le biais du système bus.

**32.** Dispositif selon la revendication 31, **caractérisé en ce que** les données des caractéristiques de réglage prédéterminées ou apprises de manière adaptative par rapport au processus sont enregistrées dans une ou plusieurs tables de correspondances.

Fig. 1

EP 0 668 711 B1

Fig. 2

Fig. 3

40

$(d^2 J/dt^2)_{lim}$

| SENSOR-EINRICHT. 1 | GLEICHR. 2 | FILTER-EINRICHT. 3 |

J(t)

DIFFEREN-ZIEREINR. 4

HITTELUNG EINRICHT. 5

EINRICHT. ZUR BEIT. VON dH/dt 6

VERGLEI-CHER 8

$d^2 J/dt^2$

HITTELUNG EINR. 10

VERGLEI-CHER 11

UND-GLIED 12

STEUER-EINRICHT. 13

STELL-GLIED 14

FREHD-REGLER 15

$J_{lim}$

J_E

E

Fig. 4

$a$

$b$

$I_{lim}$

$f$

$c$

$\left(d^2 I / dt^2\right)_{lim}$

$e$

$f$

$g$

$\tau = 0,08 \ldots 0,35\,s$

Fig. 5

Fig. 6

Fig. 7

Fig. 8